# EUROPÄISCHE PATENTSCHRIFT

(11) **EP 3 906 834 B1**
(45) Veröffentlichungstag und Bekanntmachung des Hinweises auf die Patenterteilung: **17.12.2025**
(21) Anmeldenummer: 21171937.2
(22) Anmeldetag: 04.05.2021
(51) Int. Cl.: A47L 15/24, B25J 11/00, A47L 15/00, A47L 15/42

(54) **SYSTEM ZUM BELADEN VON UNTERSCHIEDLICHEN TRANSPORTSPUREN MINDESTENS EINER SPÜLMASCHINE UND SPÜLMASCHINENANORDNUNG MIT EINEM DERARTIGEN SYSTEM**
SYSTEM FOR LOADING DIFFERENT TRANSPORT TRACKS OF AT LEAST ONE DISHWASHER AND WASHING MACHINE ASSEMBLY COMPRISING SUCH A SYSTEM
SYSTÈME DE CHARGEMENT DE DIFFÉRENTES VOIES DE TRANSPORT D'AU MOINS UNE BOBINOIR ET AGENCEMENT DE BOBINOIR DOTÉ D'UN TEL SYSTÈME

(30) Priorität: 05.05.2020 DE 102020112090
(43) Veröffentlichungstag der Anmeldung: 10.11.2021
(73) Patentinhaber: Illinois Tool Works, Inc., Glenview, Illinois 60025 (US)
(72) Erfinder: DISCH, Harald, Glenview, Illinois, 60025 (US); SCHREMPP, Martin, Glenview, Illinois, 60025 (US); BOLDT, Adrian, Glenview, Illinois, 60025 (US)
(74) Vertreter: Meissner Bolte Partnerschaft mbB

(56) Entgegenhaltungen:
- EP-B1- 2 720 597
- US-A- 3 486 939
- US-A1- 2010 043 834

## Beschreibung

Die vorliegende Erfindung betrifft eine Transportspülmaschinenanordnung mit einem System zum Beladen von unterschiedlichen Transportspuren mindestens einer Transportspülmaschine der Transportspülmaschinenanordnung.

Transportspülmaschinen der erfindungsgemäßen Transportspülmaschinenanordnung sind insbesondere gewerbliche Transportspülmaschinen und können als Bandtransportspülmaschinen oder als Korbtransportspülmaschinen ausgebildet sein.

Transportspülmaschinen (conveyor warewasher) finden im gewerblichen Bereich Anwendung. Im Gegensatz zu Haushaltsspülmaschinen, in welchen das zu reinigende Spülgut während der Reinigung ortsfest in der Maschine verbleibt, findet bei Transportspülmaschinen ein Transport des Spülguts durch verschiedene Behandlungszonen der Maschine statt.

Bei Transportspülmaschinen wird das Spülgut (wash ware), wie beispielsweise Tabletts, Geschirr, Töpfe, Gläser, Besteck und andere zu reinigende Utensilien, durch mehrere Behandlungszonen, wie z. B. Vorwaschzone(n), Hauptwaschzone(n), Nachwasch- bzw. Vorspülzone(n), Klarspülzone(n) und Trocknungszone(n), gefördert. Für den Transport von Spülgut in einer Transportrichtung durch die Transportspülmaschine kommt eine Transportvorrichtung zum Einsatz, die in der Regel mindestens eine Transportspur mit Fächern zur Aufnahme von Spülgut aufweist. Bei einer Bandtransportspülmaschine können die Fächer durch Stützfinger auf einem die Transportspur definierenden Transportband der Transportvorrichtung gebildet sein. Bei Korbtransportspülmaschinen dienen als Transportvorrichtung Geschirrkörbe, in denen zur Aufnahme des zu behandelnden Spülguts Fächer ausgebildet sein können. Denkbar hierbei ist es, dass die Geschirrkörbe mit einer Fördereinrichtung einer Transportspur durch die Korbtransportspülmaschine transportiert werden.

Üblicherweise wird das zu reinigende Spülgut vor dem Einstellen in das Transportband vorsortiert. Beispielsweise ist aus der Druckschrift US 6,530,996 B2 eine Korbtransportspülmaschine bekannt, bei welcher das zu behandelnde Spülgut vorsortiert in Geschirrkörben den jeweiligen Behandlungszonen zugeführt wird.

Die Druckschrift US 2010/0043834 A1 betrifft eine Spülmaschine mit einer Sortieranordnung und einer Beladeanordnung.

Die Druckschrift US 3,486,939 A betrifft eine Anordnung zum Klassifizieren, Reinigen und Sammeln von Spülgut.

Die Druckschrift EP 2 720 597 B1 betrifft eine Transportspülmaschine mit einem entsprechenden Beladesystem.

Transportspülmaschinen werden insbesondere in großen Einrichtungen, wie Mensen und Kantinen eingesetzt, um große Mengen an verschmutztem Spülgut möglichst wirtschaftlich zu reinigen. Mit Transportspülmaschinen der derzeit bekannten Art können mehrere hundert Gedecksätze pro Stunde gereinigt werden. Untersuchungen haben gezeigt, dass im Durchschnitt jeder Gedecksatz in der Regel aus einem Tablett, einem Teller, ein bis zwei Schälchen, einem Trinkglas sowie einem Bestecksatz besteht.

In fast sämtlichen Großküchen, wie beispielsweise Betriebskantinen oder Mensen, wird das von den Essensteilnehmern genutzte Spülgut (Geschirr, Trinkgläser, Besteck, etc.) auf Tabletts zurückgegeben. Von der Rückgabestation werden die Gedecksätze in die Spülküche transportiert. Üblicherweise erfolgt der Transport der Gedecksätze mit einem entsprechenden Zufuhrförderband. Dabei wird der Gedecksatz mit einem Förderband von der Rückgabestation in die Spülküche direkt zu einem Beladebereich der Transportspülmaschine befördert.

Im Belade- bzw. Zulaufbereich der Transportspülmaschine werden dann üblicherweise die Spülgutteile manuell vom Bedienpersonal abgenommen und in das Transportband der Transportspülmaschine einsortiert.

Im Hinblick auf Tabletts oder tablettartige Gegenstände geschieht die Vorsortierung üblicherweise derart, dass der Geschirr- und Bestecksatz von dem Bedienpersonal manuell von einem zu reinigenden Tablett abgenommen wird und das Tablett anschließend vor der Transportvorrichtung bzw. im Zulaufbereich (Schmutzseite) der Transportspülmaschine gestapelt wird. Die Tabletts aus diesem Tablettstapel werden von Zeit zu Zeit sortenrein in das Transportband der Transportspülmaschine eingestellt und gereinigt.

Dieses sortenreine Vorgehen hat den Vorteil, dass Tabletts keinen Sprühschatten auf kleinere, hinter den Tabletts eingestapelten Spülgutteile werfen können. Weiterhin ist durch dieses Vorgehen der Arbeitsablauf des Ein- und Abstapelns stark vereinfacht und effizienter im Vergleich zu einer durch Mischung des Spülguts mit den zu reinigenden Tabletts.

Während die Tabletts aus diesem Tablettstapel sortenrein in das Transportband der Transportspülmaschine eingestellt und gereinigt werden, ist es allerdings nicht möglich, anderes Spülgut zu reinigen, wie beispielsweise Teller, Schälchen oder anderes Geschirr, da die in das Transportband einzustellenden Tabletts üblicherweise quer zur Transportrichtung in das Transportband eingestellt werden müssen und so die gesamte zur Verfügung stehende Fläche des Transportbandes ausfüllen. Im Vergleich zu anderen Spülgutarten muss von daher für die Reinigung von Tabletts relativ viel Zeit aufgewendet werden.

Weiterhin muss das Bedienpersonal der Transportspülmaschine am Maschineneinlass jedes Tablett zwei Mal in seinen Arbeitsablauf einbinden: das erste Mal beim Abnehmen der Besteck- und Geschirrteile von dem zu reinigenden Tablett, und das zweite Mal beim eigentlichen Einstellen der Tabletts in das Transportband der Transportspülmaschine.

Bei dem beschriebenen Arbeitsprozess ist der manuelle Aufwand besonders hoch. Jedes Spülgutteil (Geschirrteil) eines jeden Gedecksatzes muss einzeln manuell vom Tablett abgenommen und in das Transportband der Spülmaschine eingestellt werden.

Ferner, müssen die einzelnen Besteckteile je Gedecksatz manuell von dem Tablett entnommen und ebenfalls der Transportspülmaschine zugeführt werden.

Anschließend erfolgt die zuvor beschriebene Behandlung der eigentlichen Tabletts.

Bei einer Maschinenkapazität von mehreren tausend Tellern pro Stunde muss insbesondere möglichst schnell und effizient gearbeitet werden, wodurch die körperliche Belastung des Bedienpersonals steigt.

Auf Grundlage dieser Problemstellung liegt der vorliegenden Erfindung die Aufgabe zu Grunde, eine Lösung für Transportspülmaschinen der eingangs genannten Art anzugeben, bei welcher es möglich ist, den gesamten Wasch- und Spülprozess effizienter zu gestalten, wodurch insbesondere die Arbeitszeit des Spülpersonals gekürzt und der Ressourcenverbrauch der Spülmaschinenanordnung reduziert werden kann.

Diese Aufgabe wird erfindungsgemäß durch den Gegenstand des unabhängigen Patentanspruches 1 gelöst, wobei vorteilhafte Weiterbildungen hiervon in den entsprechenden abhängigen Patentansprüchen angegeben sind.

Demgemäß betrifft die Erfindung eine Anordnung aus mindestens einer Transportspülmaschine mit unterschiedlichen Transportspuren und einem Beladesystem zum automatischen Beladen unterschiedlicher Transportspuren mindestens einer insbesondere gewerblichen Transportspülmaschine der Anordnung, wobei das Beladesystem ein Zufuhrförderband zum Zuführen von Spülgut zu Beladebereichen der mindestens einen Transportspülmaschine sowie eine Sortieranordnung zum vorzugsweise automatischen oder zumindest teilautomatischen Sortieren des über das Zufuhrförderband den Beladebereichen der mindestens einen Transportspülmaschine zugeführten Spülguts, und zwar nach vorab festgelegten oder festlegbaren Spülgutgruppen, aufweist.

Die Sortieranordnung ist ausgebildet sein, dass über das Zufuhrförderband zugeführte Spülgut nach mindestens folgenden Spülgutgruppen zu sortieren:
- eine erste Spülgutgruppe, welche aus einem Metall, insbesondere Edelstahl gefertigtes Besteck und/oder Besteckteile umfasst;
- eine zweite Spülgutgruppe, welche aus einem Kunststoffmaterial gefertigte Tabletts und tablettartige Gegenstände umfasst; und
- eine dritte Spülgutgruppe, welche aus Porzellan oder einem porzellanartigen Material gefertigte Geschirrteile, insbesondere Teller, Tassen und/oder Schälchen, umfasst.

Zusätzlich hierzu ist es optional denkbar, dass die Sortieranordnung ausgebildet ist, dass über das Zufuhrförderband zugeführte Spülgut ferner nach mindestens einer der folgenden Spülgutgruppen zu sortieren:
- eine vierte Spülgutgruppe, welche aus Glas oder einem glasartigen Material gefertigte Trinkgläser und/oder Schälchen umfasst; und
- eine fünfte Spülgutgruppe, welche aus einem Metall, insbesondere Edelstahl, gefertigte Behälter, insbesondere GN-Behälter, Töpfe und/oder Pfannen umfasst.

Erfindungsgemäß ist insbesondere vorgesehen, dass die Sortieranordnung des Beladesystems mindestens eine Beladeanordnung aufweist zum automatischen Beladen einer der mindestens einen Beladeanordnung zugeordneten, dedizierten Transportspur der mindestens einen Transportspülmaschine mit Spülgut einer der vorab festgelegten oder festlegbaren Spülgutgruppen, wie beispielsweise mit Spülgut gemäß der ersten, zweiten oder dritten Spülgutgruppe.

Mit dem erfindungsgemäßen Beladesystem kann die Transportspülmaschinenanordnung mit verschiedenen Ausbaustufen zur Automatisierung von manuellen Be- und Entladearbeitsschritten ausgestaltet werden. Eine erste Ausbaustufe kann darin bestehen, dass die Transportspülmaschinenanordnung eine einzige Transportspülmaschine aufweist, wobei die einzige Transportspülmaschine der Transportspülmaschinenanordnung neben einem Haupttransportband auch über eine Tablettspur (Tablett-Transportband) verfügt, wobei diese Tablettspur vorzugsweise parallel neben dem Haupttransportband angeordnet ist.

Bei dieser Ausbaustufe werden beispielsweise die Gedecksätze, wie bereits beschrieben, entweder direkt durch den Essensteilnehmer oder durch das Spülpersonal auf das Zufuhrförderband des Beladesystems abgestellt. Das Zufuhrförderband fördert dann die Gedecksätze zum Zulauf- bzw. Beladebereich der Transportspülmaschine. Dort werden die Besteck- und Geschirrteile manuell von den Tabletts abgenommen. Die manuell abgenommenen Geschirrteile werden dann manuell in das Haupttransportband der Transportspülmaschine einsortiert.

Die abgenommenen Besteckteile können in Spülkörben gesammelt und im weiteren Verlauf in der Transportspülmaschine gereinigt werden.

Mit der ersten Ausbaustufe werden die Tabletts nicht mehr manuell in die Spülmaschine einsortiert. Diese werden über das Zufuhrförderband parallel in Richtung des Maschinenzulaufs der Transportspülmaschine weitergefördert und dort über eine Eintaktvorrichtung oder Einstellvorrichtung automatisch in ein spezielles Tablett-Transportband (Tablettspur) eingebracht. Diese Tablettspur verläuft vorzugsweise parallel zum Haupttransportband.

Gemäß einer zweiten Ausbaustufe ist zusätzlich zu der zuvor genannten Tablettspur eine separate Besteckspur vorhanden. Diese Besteckspur verläuft vorzugsweise ebenfalls parallel zur und direkt neben der Tablettspur. Denkbar in diesem Zusammenhang ist es aber auch, dass die Tablettspur Teil einer Transportvorrichtung einer ersten Transportspülmaschine der Transportspülmaschinenanordnung und dass die Besteckspur Teil einer Transportvorrichtung einer zweiten Transportspülmaschine der Transportspülmaschinenanordnung ist.

Wie zuvor beschrieben, werden die Gedecksätze über das Zufuhrförderband des Beladesystems an den Zulauf- bzw. Beladebereich einer der Transportspülmaschinen der Transportspülmaschinenanordnung gefördert. Bei dieser zweiten Ausbaustufe müssen nun nur noch die Geschirrteile und die Gläser von den zugeführten Tabletts manuell abgenommen und in ein Haupttransportband der Transportspülmaschine oder in ein Haupttransportband einer weiteren Transportspülmaschine einsortiert werden.

Das Tablett und das darauf befindliche Besteck verbleiben auf dem Zufuhrförderband. Dieses wird zu einer Eintaktvorrichtung für Besteck, wie beispielsweise einem Besteckabhebemagneten, weitergefördert. Hier können die Besteckteile automatisch von den Tabletts abgenommen und in eine Besteckspur einer der Transportspülmaschinen der Transportspülmaschinenanordnung eingebracht werden. Anschließend wird das Tablett zur Eintaktvorrichtung gefördert, wo es automatisch in eine Tablettspur einer der Transportspülmaschinen der Transportspülmaschinenanordnung eingeladen wird.

Um zusätzlich hierzu die zur Beladung der mindestens einen Transportspülmaschine der Transportspülmaschinenanordnung notwendigen manuellen Handhabungsschritte weiter zu reduzieren, sieht das erfindungsgemäße Beladesystem vor, dass auch Teller und Schälchen automatisch in die mindestens eine Transportspülmaschine und insbesondere in ein Haupttransportband der mindestens einen Transportspülmaschine einsortiert werden können.

Auf diese Weise können insgesamt somit manuelle Arbeitsschritte und damit der Arbeitsaufwand für das Spülpersonal eingespart werden, da das Spülpersonal im Idealfall die Transportspülmaschine(n) nicht mehr manuell beladen muss. Insbesondere gewährleistet das erfindungsgemäße Beladesystem eine möglichst ergonomische und benutzerfreundliche Bedienung der mindestens einen Transportspülmaschine, da ein manuelles Beladen der Spülgutteile in die Transportspülmaschine(n) nicht mehr erforderlich ist.

Zusätzlich hierzu wird mit dem erfindungsgemäßen Beladesystem das Reinigungsergebnis der Spülmaschinenanordnung verbessert, da sämtliches Spülgut einer festgelegten Spülgutgruppe einheitlich auf einer für dieses Spülgut vorgesehenen Transportspur der mindestens einen Transportspülmaschine orientiert ist.

Darüber hinaus lässt sich der Entladeprozess vereinfachen, da jede Spülgutgruppe auf einer definierten Transportspur durch die mindestens eine Transportspülmaschine der Transportspülmaschinenanordnung transportiert werden kann und somit bereits vorsortiert am Entladebereich der Transportspülmaschinenanordnung ankommt.

Um das über das Zufuhrförderband des erfindungsgemäßen Beladesystems den Beladebereichen der mindestens einen Transportspülmaschine zugeführte Spülgut nach den vorab festgelegten oder festlegbaren Spülgutgruppen sortieren zu können, ist gemäß Ausführungsformen des erfindungsgemäßen Beladesystems vorgesehen, dass die Sortieranordnung ausgebildet ist, die über das Zufuhrförderband zugeführten Spülgutteile in Abhängigkeit von dessen Material, Größe und/oder Formgebung nach den vorab festgelegten oder festlegbaren Spülgutgruppen zu sortieren.

Beispielsweise ist es denkbar, dass die Sortieranordnung ausgebildet ist, dass in der mindestens einen Transportspülmaschine zu behandelnde Spülgut automatisch zu differenzieren. Zu diesem Zweck kann der Sortieranordnung eine Spülgutdetektorvorrichtung zugeordnet sein, welche dazu dient, die Art der über das Zufuhrförderband zugeführten Spülgutteile (Teller, Tassen, Schälchen, Besteck, Tabletts, Trinkgläser, etc.) zu erfassen und dann jede erfasste Spülgutart einer vorab festgelegten oder festlegbaren Spülgutgruppe zuzuordnen.

Hierzu kann der Sortieranordnung eine entsprechende Spülgutdetektorvorrichtung zugeordnet sein, welche dazu dient, die Art der über das Zufuhrförderband zugeführten Spülgutteile zu erfassen.

Unter dem hierin verwendeten Begriff "Spülgutdetektorvorrichtung" ist jedwede Detektionsvorrichtung zu verstehen, welche ausgelegt ist, die Art des über das Zufuhrförderband zugeführten Spülguts zu erfassen bzw. zu bestimmen. Denkbar hierbei ist es insbesondere, dass die Spülgutdetektorvorrichtung wenigstens eine Detektoreinrichtung aufweist, mit welcher die Größe, die Formgebung und/oder das Material der über das Zufuhrförderband zugeführten Spülgutteile erfasst werden kann.

Gemäß denkbaren Realisierungen kann die Spülgutdetektorvorrichtung wenigstens eine vorzugsweise optisch, induktiv oder kapazitiv arbeitende Detektoreinrichtung aufweisen, so dass zur Identifizierung der Spülgutart die Größe, die Formgebung und/oder das Material des entsprechenden Spülgutteils erfasst werden können/kann. Als Detektoreinrichtung kommen aber auch andere Detektortypen in Frage, wie beispielsweise induktivarbeitende Näherungssensoren, Lichttaster, Lichtvorhänge, Laserscanner, 3D-Laser, Kameras, Drehgeber, etc.

Die Spülgutdetektorvorrichtung ist vorzugsweise vor der Sortieranordnung und insbesondere vor der der Sortieranordnung zugeordneten mindestens einen Beladeanordnung angeordnet, damit die Art des zugeführten Spülguts erfasst werden kann und die entsprechende Beladeanordnung angesteuert werden kann.

Gemäß Ausführungsformen ist die Sortieranordnung des erfindungsgemäßen Beladesystems bzw. die der Sortieranordnung zugeordnete Spülgutdetektorvorrichtung ausgelegt, mindestens Folgendes Spülgut automatisch zu erkennen:
- aus Porzellan oder einem porzellanartigen Material gefertigte Teller;
- aus Porzellan oder einem porzellanartigen Material, Glas oder einem glasartigen Material gefertigte Tassen;
- aus Porzellan oder einem porzellanartigen Material, Glas oder einem Glasartigen Material gefertigte Schalen;
- aus einem Kunststoffmaterial gefertigte Tabletts oder tablettartige Gegenstände;
- aus einem Metall, insbesondre aus Edelstahl gefertigte Behälter, insbesondere GN-Behälter;
- aus einem Metall, insbesondere aus Edelstahl gefertigte Töpfe;
- aus einem Metall, insbesondere aus Edelstahl gefertigte Pfannen;
- aus einem Metall, insbesondere aus Edelstahl gefertigte Bestecke oder Besteckteile;
- aus Glas oder einem Glasartigen Material gefertigte Trinkgläser; und
- Trinkbecher aus Kunststoff.

Gemäß der Erfindung ist die Sortieranordnung nicht nur ausgebildet, die Spülgutart der über das Zufuhrförderband zugeführten Spülgutteile automatisch zu erfassen, sondern auch durch die zusätzliche Funktionalität, wonach diese ausgelegt ist, jede erfasste Spülgutart einer vorab festgelegten oder festlegbaren Spülgutgruppe zuzuordnen.

Die Sortieranordnung ist ausgebildet, dass über das Zufuhrförderband geführte Spülgut nach mindestens Folgende Spülgutgruppen zu sortieren:
- eine erste Spülgutgruppe, welche aus einem Metall, insbesondere Edelstahl gefertigtes Besteck und/oder Besteckteile umfasst;
- eine zweite Spülgutgruppe, welche aus einem Kunststoffmaterial gefertigte Tabletts und tablettartige Gegenstände umfasst; und
- eine dritte Spülgutgruppe, welche aus Porzellan oder einem porzellanartigen Material gefertigte Geschirrteile, insbesondere Teller, Tassen und/oder Schälchen, umfasst.

Mit Hilfe dieser Zuordnung wird der Erkenntnis Sorge getragen, das Spülgut unterschiedlicher Spülgutarten, welche beim Zulauf- bzw. Beladebereich der Transportspülmaschinenanordnung in identische Transportspuren einsortiert werden können, in eine Spülgutgruppe zusammengefasst wird.

Insbesondere ist es von Vorteil, dass die Sortieranordnung eine Vielzahl von Sortierstationen aufweist, in welchen sukzessiv das über das Zufuhrförderband zugeführte Spülgut in die vorab festgelegten Spülgutgruppen sortiert werden.

Diese Sortierstationen sind vorzugsweise - in Transportrichtung des Zufuhrförderbandes gesehen - hintereinander angeordnet.

Damit das automatische Beladesystem vollautomatisch arbeiten kann, ist der Sortieranordnung bzw. den einzelnen Sortierstationen der Sortieranordnung jeweils mindestens eine Beladeanordnung je Spülgutgruppe zugeordnet.

Gemäß der Erfindung weist die Sortieranordnung eine erste Beladeanordnung auf zum automatischen Beladen einer ersten Transportspur einer der Transportspülmaschinen der Transportspülmaschinenanordnung mit Spülgut der ersten Spülgutgruppe, wobei ferner die Sortieranordnung eine zweite Beladeanordnung aufweist zum automatischen Beladen einer zweiten Transportspur einer der Transportspülmaschinen der Transportspülmaschinenanordnung mit Spülgut der zweiten Spülgutgruppe, und wobei ferner die Sortieranordnung eine dritte Beladeanordnung aufweist zum automatischen Beladen einer dritten Transportspur einer der Transportspülmaschinen der Transportspülmaschinenanordnung mit Spülgut der dritten Spülgutgruppe.

Um kompatibel mit den zuvor beschriebenen beiden Ausbaustufen zur Automatisierung von manuellen Be- und Entladearbeitsschritten zu sein, ist die dritte Beladeanordnung - in Transportrichtung des Zufuhrförderbandes gesehen - stromaufwärts der ersten und zweiten Beladeanordnung angeordnet, wobei die erste Beladeanordnung vorzugsweise stromaufwärts der zweiten Beladeanordnung angeordnet ist.

Die dritte Beladeanordnung, welche ausgebildet ist, eine Transportspülmaschine der Transportspülmaschinenanordnung oder eine dedizierte Transportspur einer Transportspülmaschine der Transportspülmaschinenanordnung mit Spülgut der dritten Spülgutgruppe automatisch zu beladen, weist gemäß des erfindungsgemäßen Beladesystems mindestens einen Manipulator auf, welcher ausgebildet ist, die über das Zufuhrförderband zugeführten Spülgutteile der dritten Spülgutgruppe zu greifen, von dem Zufuhrförderband abzunehmen und an einer vorab festgelegten oder festlegbaren dedizierten Position abzulegen.

Bei dieser vorab festgelegten oder festlegbaren dedizierten Position handelt es sich beispielsweise um ein Bereich eines Förderbandes einer Transportspülmaschine, insbesondere das Hauptförderband einer Transportspülmaschine.

Alternativ hierzu ist es aber auch denkbar, dass die vorab festgelegte oder festlegbare dedizierte Position in einem Bereich liegt, der sich vorzugsweise außerhalb der Transportspülmaschine befindet und als Stellfläche zum Ausbilden eines Spülgutstapels, insbesondere Geschirrstapels dient.

Bei dem erfindungsgemäßen Beladesystem weist der mindestens eine Manipulator der dritten Beladeanordnung ein Greifersystem mit mindestens einer Greifzange und/oder mit mindestens einem Sauggreifer auf. Der Manipulator der dritten Beladeanordnung ist dabei ausgebildet, die über das Zufuhrförderband zugeführten Spülgutteile der dritten Spülgutgruppe zu greifen, von dem Zufuhrförderband abzunehmen und an der genannten vorab festgelegten oder festlegbaren dedizierten Position abzulegen, wobei es sich hierbei entweder um einen Bereich eines Förderbandes, insbesondere Hauptförderbandes, einer Transportspülmaschine der Transportspülmaschinenanordnung oder um eine Stellfläche außerhalb der Transportspülmaschine handelt. Optional oder zusätzlich hierzu kann der mindestens eine Manipulator der dritten Beladeanordnung einen ansteuerbaren Magnet für Bestecke oder Besteckteile aufweisen, um auf einen separat hiervon ausgeführten Besteckabhebemagnet verzichten zu können.

Der mindestens eine Manipulator der dritten Beladeanordnung weist eine Ausgangsstellung auf, in welcher das Greifersystem des Manipulators derart oberhalb des Zufuhrförderbandes angeordnet ist, dass Spülgutteile der dritten Spülgutgruppe bei deren Transport mit dem Zufuhrförderband in den Greifbereich der mindestens einen Greifzange und/oder des mindestens einen Sauggreifers gefördert werden.

Die Ausgangsstellung des mindestens einen Manipulators der dritten Beladeanordnung ist vorzugsweise derart gewählt, dass nur Spülgutteile der dritten Spülgutgruppe, nicht aber Spülgutteile der ersten oder zweiten Spülgutgruppe beim Transport mit dem Zufuhrförderband in den Greifbereich der mindestens einen Greifzange und/oder des mindestens einen Sauggreifers gefördert werden. Dies ist beispielsweise dadurch realisierbar, indem das Greifersystem von der Ebene, in welcher das Zufuhrförderband liegt, vertikal in geeigneter Weise beabstandet ist.

Grundsätzlich ist es von Vorteil, wenn dem Greifersystem des mindestens einen Manipulators der dritten Beladeanordnung eine entsprechende Sensorik zugeordnet ist, welche ausgebildet ist, zu erfassen, wenn sich mindestens ein Spülgutteil und insbesondere mindestens ein Spülgutteil der dritten Spülgutgruppe in dem Greifbereich der mindestens einen Greifzange und/oder in dem Greifbereich des mindestens einen Sauggreifers befindet. Denkbar in diesem Zusammenhang ist es ferner, dass eine geeignete Steuereinrichtung vorgesehen ist, welche ausgebildet ist, ein Greifen der mindestens einen Greifzange und/oder des mindestens einen Sauggreifers zu initiieren, wenn die dem Greifersystem zugeordnete Sensorik erfasst, dass sich mindestens ein Spülgutteil und insbesondere mindestens ein Spülgutteil der dritten Spülgutgruppe in dem Greifbereich der mindestens einen Greifzange und/oder in dem Greifbereich des mindestens einen Sauggreifers befindet.

In diesem Zusammenhang bietet es sich an, wenn die Steuereinrichtung ferner ausgebildet ist, den mindestens einen Manipulator der dritten Beladeanordnung derart anzusteuern, dass dieser das mindestens eine von dem Greifersystem gegriffene mindestens eine Spülgutteil von dem Zufuhrförderband abnimmt und an einer vorab festgelegten oder festlegbaren dedizierten Position ablegt, wie beispielsweise auf dem Hauptförderband einer Transportspülmaschine der Transportspülmaschinenanordnung.

In einer Weiterbildung der zuletzt genannten Ausführungsformen ist dem Greifersystem des mindestens einen Manipulators der dritten Beladeanordnung eine Positionierhilfe zugeordnet, welche mindestens ein Führungselement aufweist, wobei das mindestens eine Führungselement ausgebildet ist, vorzugsweise nur Spülgut der dritten Spülgutgruppe, welches über das Zufuhrförderband zugeführt wird, in Richtung des Greifbereiches der mindestens einen Greifzange und/oder in Richtung des Greifbereiches des mindestens einen Sauggreifers zu lenken.

Alternativ oder zusätzlich hierzu kann dem Greifersystem ein vorzugsweise optisch arbeitendes Erkennungssystem zugeordnet sein, um automatisch das über das Zufuhrförderband zugeführte Spülgut zu erkennen, und insbesondere Spülgut der dritten Spülgutgruppe. Bei dieser Ausführungsform bietet es sich an, eine Steuereinrichtung vorzusehen, welche ausgebildet ist, den Manipulator der dritten Beladeanordnung mit dem Greifersystem zu dem Spülgutteil zu bewegen, wenn mit dem Erkennungssystem ein Spülgutteil der dritten Spülgutgruppe in dem über das Zufuhrförderband zugeführten Spülgut erkannt wird.

Die Transportspülmaschinenanordnung umfasst insbesondere mindestens eine Transportspülmaschine mit unterschiedlichen Transportspuren, vorzugsweise in Gestalt jeweils eines Transportbandes, und ein Beladesystem der zuvor beschriebenen Art, wobei die Sortieranordnung des Beladesystems für jede Transportspur der mindestens einen Transportspülmaschine eine Beladeanordnung aufweist zum vorzugsweise automatischen Einstellen von Spülgut einer bestimmten Spülgutgruppe in die der mindestens einen Beladeanordnung zugeordneten Transportspur der mindestens einen Transportspülmaschine.

Bei der erfindungsgemäßen Transportspülmaschinenanordnung ist die Sortieranordnung des Beladesystems ausgebildet, das über das Zufuhrförderband zugeführte Spülgut nach mindestens folgende Spülgutgruppen zu sortieren:
- eine erste Spülgutgruppe, welche aus einem Metall, insbesondere Edelstahl, gefertigtes Besteck und/oder Besteckteile umfasst;
- eine zweite Spülgutgruppe, welche aus einem Kunststoffmaterial gefertigte Tabletts und tablettartige Gegenstände umfasst; und
- eine dritte Spülgutgruppe, welche aus Porzellan oder einem porzellanartigen Material gefertigte Geschirrteile, insbesondere Teller, Tassen und/oder Schälchen, umfasst.

Die Sortieranordnung weist eine erste Beladeanordnung auf zum automatischen Beladen einer ersten Transportspur der mindestens einen Transportspülmaschine mit Spülgut der ersten Spülgutgruppe, wobei die Sortieranordnung ferner eine zweite Beladeanordnung aufweist zum automatischen Beladen einer zweiten Transportspur der mindestens einen Transportspülmaschine mit Spülgut der zweiten Spülgutgruppe, und wobei die Sortieranordnung eine dritte Beladeanordnung aufweist zum automatischen Beladen einer dritten Transportspur der mindestens einen Transportspülmaschine mit Spülgut der dritten Spülgutgruppe.

Dabei sind die erste und zweite Transportspur Teil einer Transportvorrichtung einer ersten Transportspülmaschine, während die dritte Transportspur Teil einer Transportvorrichtung einer zweiten Transportspülmaschine ist.

Nachfolgend werden exemplarische Ausführungsformen der erfindungsgemäßen Lösung anhand der Zeichnungen näher beschrieben.

Es zeigen:
- FIG. 1: schematisch und in einer Draufsicht den Beladebereich einer Transportspülmaschine mit einer exemplarischen Ausführungsform des erfindungsgemäßen Beladesystems;
- FIG. 2A: schematisch und in einer Seitenansicht eine exemplarische Ausführungsform des erfindungsgemäßen Beladesystems in einem ersten Zustand, in welchem ein Manipulator des Beladesystems in seiner Ausgangsstellung bzw. Warteposition vorliegt;
- FIG. 2B: schematisch und in einer Seitenansicht das Beladesystem gemäß FIG. 2A in einem zweiten Zustand, in welchem der Manipulator des Beladesystems in seiner Beladeposition vorliegt;
- FIG. 3A: schematisch und in einer Seitenansicht eine exemplarische Ausführungsform des erfindungsgemäßen Beladesystems in einem ersten Zustand, in welchem ein Manipulator des Beladesystems in seiner Ausgangsstellung bzw. Erkennungsposition vorliegt;
- FIG. 3B: schematisch und in einer Seitenansicht das Beladesystem gemäß FIG. 3A in einem zweiten Zustand, in welchem der Manipulator des Beladesystems in seiner Beladeposition vorliegt;
- FIG. 4: schematisch und in einer isometrischen Ansicht den Beladebereich einer Transportspülmaschine mit einer exemplarischen Ausführungsform des erfindungsgemäßen Beladesystems, bei welcher zum automatischen Beladen einer parallel zu einem Haupttransportband der Transportspülmaschine verlaufenden Tablettspur eine entsprechende Beladeanordnung zum Einsatz kommt;
- FIG. 5A, B: schematisch und in einer Draufsicht und Querschnittansicht das Haupttransportband und die parallel hierzu verlaufende Tablettspur der Transportspülmaschine gemäß FIG. 4;
- FIG. 6: schematisch und in einer isometrischen Ansicht den Beladebereich einer Transportspülmaschine mit einer exemplarischen Ausführungsform des erfindungsgemäßen Beladesystems, bei welcher zum automatischen Beladen einer parallel zu einem Haupttransportband der Transportspülmaschine verlaufenden Tablettspur sowie zum automatischen Beladen einer parallel zu dem Haupttransportband verlaufenden Besteckspur eine entsprechende Beladeanordnung zum Einsatz kommt;
- FIG. 7A, B: schematisch und in einer Draufsicht und Querschnittansicht das Haupttransportband und die parallel hierzu verlaufenden Tablett- und Besteckspuren der Transportspülmaschine gemäß FIG. 6; und
- FIG. 8: schematisch und in einer Draufsicht die Beladebereiche einer zwei Transportspülmaschinen umfassenden Transportspülmaschinen- anordnung mit einer exemplarischen Ausführungsform des erfindungsgemäßen Beladesystems.

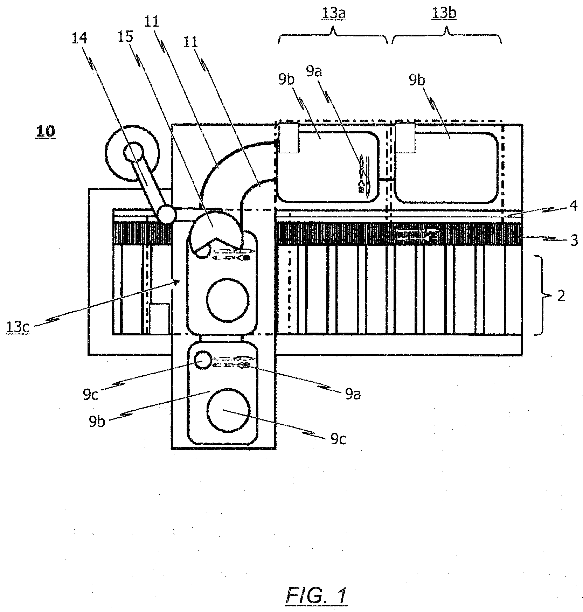

In FIG. 1 ist schematisch und in einer Draufsicht der Beladebereich einer nur bereichsweise gezeigten Transportspülmaschine 1 gezeigt. Die Transportspülmaschine 1 weist eine Transportvorrichtung (Hauptförderband 2, Besteckförderband 3, Tablettförderband 4) zum Transportieren von Spülgut 9a, 9b, 9c in einer Transportrichtung durch die Transportspülmaschine 1 auf. Die Transportvorrichtung ist insbesondere ausgebildet, um gleichzeitig mehrere nebeneinander angeordnete Spülgutarten in den Behandlungszonen der Transportspülmaschine 1 behandeln zu lassen, um auf diese Weise den gesamten Wasch- und Spülprozess effizienter zu gestalten, wodurch insbesondere die Arbeitszeit des Spülpersonals gekürzt und der Ressourcenverbrauch der Spülmaschine 1 reduziert werden kann.

Die hierin berücksichtigte Transportspülmaschine 1 weist mindestens eine Waschzone, wie beispielsweise eine Vorwaschzone und eine Hauptwaschzone, welche in der Transportrichtung des Spülguts 9a, 9b, 9c gesehen nach der Vorwaschzone angeordnet ist, auf. In Transportrichtung gesehen ist nach der mindestens einen Waschzone vorzugsweise eine Nachwaschzone und nach der Nachwaschzone mindestens eine Klarspülzone, wie beispielsweise eine Frischwasser-Klarspülzone und/oder eine Pumpen-Klarspülzone vorgesehen. In Transportrichtung des Spülguts 9a, 9b, 9c gesehen schließt sich an der mindestens einen Klarspülzone eine Trocknungszone an.

Die jeweiligen Zonen der Transportspülmaschine 1 können über Trennvorhänge voneinander getrennt sein. Auch ist es denkbar, wenn der Einlauftunnel der Transportspülmaschine 1, welcher in Transportrichtung gesehen nach dem Beladebereich der Transportspülmaschine 1 vorgesehen ist, über einen Trennvorhang von dem Einlauf der Transportspülmaschine 1 getrennt. Durch das Vorsehen von Trennvorhängen kann ein Überspritzen von Waschflüssigkeit und Klarspülflüssigkeit und der Austritt von Wrasen aus der Transportspülmaschine 1 verhindert werden.

Den Behandlungszonen der Transportspülmaschine 1 sind Sprühdüsen zugeordnet. Diese Sprühdüsen dienen dazu, Flüssigkeit auf das zu behandelnde Spülgut 9a, 9b, 9c zu sprühen, wenn dieses von der Transportvorrichtung durch die jeweiligen Behandlungszonen transportiert wird. Die einzelnen Sprühsysteme der Behandlungszone gewährleisten, dass das zu behandelnde Spülgut 9a, 9b, 9c sowohl von der Oberseite als auch der Unterseite abgespritzt wird.

Am Beladebereich der Transportspülmaschine 1 ist bei der in FIG. 1 schematisch dargestellten Ausführungsform ein System 10 zum Beladen der Transportspülmaschine 1 vorgesehen. Das Beladesystem 10 weist ein zugeordnetes Zufuhrförderband 11 auf, über welches Spülgut 9a, 9b, 9c dem Beladebereich der Transportspülmaschine 1 zuführbar ist.

Das Beladesystem 10 weist ferner eine Sortieranordnung auf, um das über das Zufuhrförderband 11 dem Beladebereich der Transportspülmaschine 1 zugeführte Spülgut 9a, 9b, 9c nach vorab festgelegten oder festlegbaren Spülgutgruppen zu sortieren.

Im Einzelnen ist bei der in FIG. 1 gezeigten exemplarischen Ausführungsform die Sortieranordnung ausgebildet, das über das Zufuhrförderband 11 zugeführte Spülgut 9a, 9b, 9c nach folgende Spülgutgruppen zu sortieren:
- eine erste Spülgutgruppe, welche aus einem Metall, insbesondere Edelstahl gefertigtes Besteck und/oder Besteckteile 9a umfasst;
- eine zweite Spülgutgruppe, welche aus einem Kunststoffmaterial gefertigte Tablett und tablettartige Gegenstände 9b umfasst; und
- eine dritte Spülgutgruppe, welche aus Porzellan oder einem porzellanartigen Material gefertigte Geschirrteile 9c, insbesondere Teller, Tassen und/oder Schälchen, umfasst.

Grundsätzlich ist es denkbar, wenn die Sortieranordnung ferner ausgebildet ist, das über das Zufuhrförderband 11 zugeführte Spülgut 9a, 9b, 9c zusätzlich nach mindestens einer der folgenden Spülgutgruppen zu sortieren:
- eine vierte Spülgutgruppe, welche aus Glas oder einem glasartigen Material gefertigte Trinkgläser und/oder Schälchen umfasst; und
- eine fünfte Spülgutgruppe, welche aus einem Metall, insbesondere Edelstahl, gefertigte Behälter, insbesondere GN-Behälter, Töpfe und/oder Pfannen umfasst.

Das erfindungsgemäße Beladesystem 10, welches gemäß einer exemplarischen Ausführungsform schematisch in FIG. 1 in einer Draufsicht gezeigt ist, weist ferner mindestens eine der Sortieranordnung zugeordnete Beladeanordnung 13a, 13b, 13c auf, um automatisch die Transportspülmaschine 1 und im Einzelnen entsprechende Spuren oder Bereiche des Transportbandes (z.B. Hauptförderband 2, Besteckförderband 3, Tablettförderband 4) der Transportspülmaschine 1 mit Spülgut 9a, 9b, 9c einer der vorab festgelegten oder festlegbaren Spülgutgruppen zu beladen.

Beispielsweise ist bei der in FIG. 1 schematisch dargestellten Lösung eine erste Beladeanordnung 13a vorgesehen, welche ausgebildet ist, die Transportspülmaschine 1 und im Einzelnen eine parallel zu einem Haupttransportband 2 der Transportspülmaschine 1 verlaufende Besteckspur 3 mit Spülgut 9a der ersten Spülgutgruppe (d.h. mit aus einem Metall, insbesondere Edelstahl gefertigtem Besteck und/oder Besteckteilen) automatisch zu beladen.

Ferner kommt eine zweite Beladeanordnung 13b zum Einsatz, welche ausgebildet ist, die Transportspülmaschine 1 und im Einzelnen eine parallel zu dem Haupttransportband 2 der Transportspülmaschine 1 verlaufende Tablettspur 4 mit Spülgut 9b der zweiten Spülgutgruppe (d.h. mit aus einem Kunststoffmaterial gefertigten Tabletts und tablettartigen Gegenständen) automatisch zu beladen. Zusätzlich hierzu kommt bei der in FIG. 1 gezeigten exemplarischen Ausführungsform eine dritte Beladeanordnung 13c zum Einsatz, welche ausgebildet ist, die Transportspülmaschine 1 und im Einzelnen das Haupttransportband 2 der Transportspülmaschine 1 mit Spülgut 9c der dritten Spülgutgruppe (d.h. mit aus Porzellan oder einem porzellanartigen Material gefertigten Geschirrteilen) automatisch zu beladen.

Dabei ist vorgesehen, dass - in Transportrichtung des Zufuhrförderbandes gesehen - die dritte Beladeanordnung 13c stromaufwärts der ersten und zweiten Beladeanordnung 13a, 13b angeordnet ist. Ferner ist bei der in der FIG. 1 gezeigten Ausführungsform vorgesehen, dass die erste Beladeanordnung 13a stromaufwärts der zweiten Beladeanordnung 13b angeordnet ist.

Gemäß FIG. 1 weist die dritte Beladeanordnung 13c einen Manipulator 14 auf, welcher ausgebildet ist, insbesondere Spülgutteile 9c der dritten Spülgutgruppe zu greifen, von dem Zufuhrförderband 11 abzunehmen und an einer vorab festgelegten oder festlegbaren dedizierten Position abzulegen.

Bei dieser vorab festgelegten oder festlegbaren dedizierten Position handelt es sich um eine Position in einem Bereich des Transportbandes (Förderbandes) der Transportspülmaschine 1, insbesondere in einem Bereich eines Hauptförderbandes 2 der Transportspülmaschine 1.

Alternativ hierzu ist es aber auch grundsätzlich denkbar, wenn die vorab festgelegte oder festlegbare dedizierte Position in einem Bereich liegt, der sich vorzugsweise außerhalb der Transportspülmaschine 1 befindet und als Stellfläche zum Ausbilden eines Geschirrstapels dient.

Wie es der Draufsicht in FIG. 1 entnommen werden kann, sieht das erfindungsgemäße Beladesystem 10 vor, dass der mindestens eine Manipulator 14 der dritten Beladeanordnung 13c ein Greifersystem 15 mit mindestens einer Greifzange aufweist.

Alternativ oder zusätzlich zu einer Greifzange wäre es aber auch denkbar, wenn das Greifersystem 15 der dritten Beladeanordnung 13c mindestens einen Sauggreifer aufweist.

Grundsätzlich ist es von Vorteil, wenn der Manipulator 14 der dritten Beladeanordnung 13c ausgebildet ist, mit dem Greifersystem 15 insbesondere Spülgut 9c der dritten Spülgutgruppe zu greifen, von dem Zufuhrförderband 11 abzunehmen und an der vorab festgelegten oder festlegbaren dedizierten Position abzulegen.

In diesem Zusammenhang ist es denkbar, wenn der mindestens eine Manipulator 14 der dritten Beladeanordnung 13c eine Ausgangsstellung oder Warteposition aufweist, in welcher das Greifersystem 15 des Manipulators 14 derart oberhalb des Zufuhrförderbandes 11 angeordnet ist, dass Spülgutteile 9c der dritten Spülgutgruppe bei deren Transport mit dem Zufuhrförderband 11 in den Greifbereich der mindestens einen Greifzange gefördert werden.

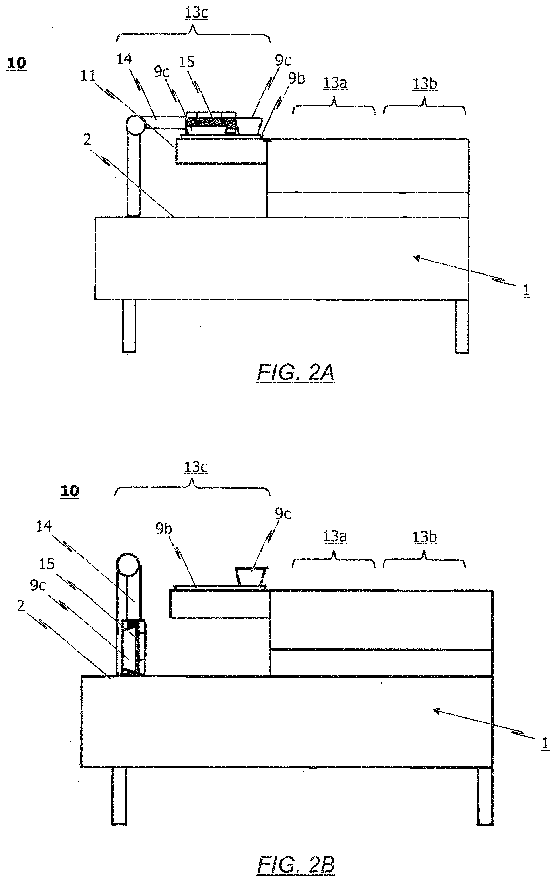

In diesem Zusammenhang wird auf die schematische Darstellung gemäß FIG. 2A verwiesen. Im Einzelnen zeigt FIG. 2A schematisch und in einer Seitenansicht eine exemplarische Ausführungsform des erfindungsgemäßen Beladesystems 10 in einem ersten Zustand, in welchem ein Manipulator 14 des Beladesystems 10 in seiner Ausgangsstellung bzw. Warteposition vorliegt.

Insbesondere ist die Ausgangsstellung bzw. Warteposition des mindestens einen Manipulators 14 der dritten Beladeanordnung 13c derart gewählt, dass nur Spülgutteile 9c der dritten Spülgutgruppe nicht aber Spülgutteile 9a, 9b der ersten oder zweiten Spülgutgruppe beim Transport mit dem Zufuhrförderband 11 in den Greifbereich der mindestens einen Greifzange gefördert werden.

In vorteilhafter Weise ist dem Greifersystem 15 des mindestens einen Manipulators 14 der dritten Beladeanordnung 13c eine Sensorik zugeordnet, welche ausgebildet ist, zu erfassen, wenn sich mindestens ein Spülgutteil 9a, 9b, 9c und insbesondere mindestens ein Spülgutteil 9c der dritten Spülgutgruppe in dem Greifbereich der mindestens einen Greifzange befindet.

Dem Beladesystem 10 ist vorzugsweise eine Steuereinrichtung zugeordnet, welche ausgebildet ist, ein Greifen der mindestens einen Greifzange zu initiieren, wenn die dem Greifersystem 15 zugeordnete Sensorik erfasst, dass sich mindestens ein Spülgutteil 9a, 9b, 9c und insbesondere mindestens ein Spülgutteil 9c der dritten Spülgutgruppe in dem Greifbereich der mindestens einen Greifzange befindet.

Gemäß vorteilhaften Realisierungen ist die Steuereinrichtung vorzugsweise ferner ausgebildet, den mindestens einen Manipulator 14 der dritten Beladeanordnung 13c derart anzusteuern, dass dieser das mindestens eine von dem Greifersystem 15 gegriffene mindestens eine Spülgutteil von dem Zufuhrförderband 11 abnimmt und an einer vorab festgelegten oder festlegbaren dedizierten Position ablegt.

Beispielsweise zeigt FIG. 2B schematisch und in einer Seitenansicht das Beladesystem 10 gemäß FIG. 2A in einem zweiten Zustand, in welchem der Manipulator 14 des Beladesystems 10 in seiner Beladeposition vorliegt.

Grundsätzlich bietet es sich an, wenn insbesondere dem Greifersystem 15 des mindestens einen Manipulators 14 der dritten Beladeanordnung 13c eine Positionierhilfe zugeordnet ist, welche mindestens ein Führungselement aufweist, wobei das mindestens eine Führungselement ausgebildet ist, vorzugsweise nur Spülgut 9c der dritten Spülgutgruppe, welches über das Zufuhrförderband 11 zugeführt wird, in Richtung des Greifbereichs der mindestens einen Greifzange des Greifersystems 15 zu lenken.

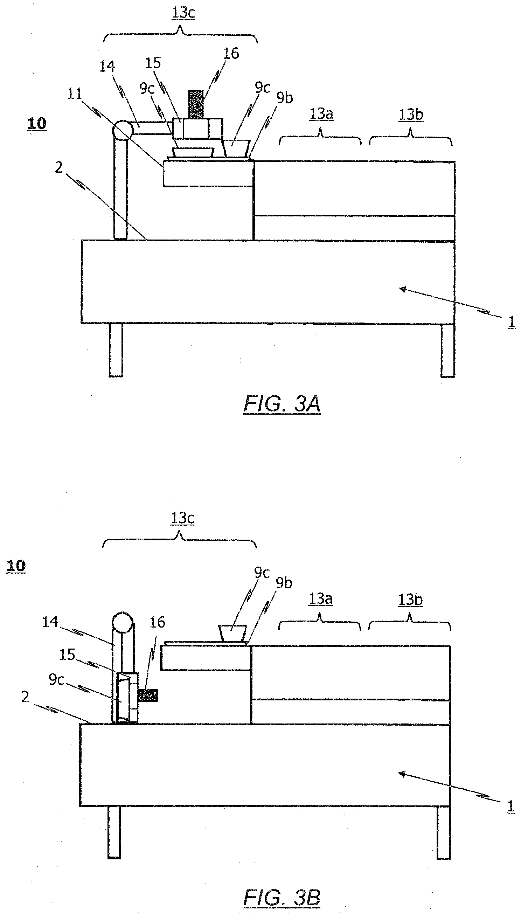

Gemäß Weiterbildungen ist vorgesehen, dass dem Greifersystem 15 ein vorzugsweise optisch arbeitendes Erkennungssystem 16 zugeordnet ist zum automatischen Erkennen von über das Zufuhrförderband 11 zugeführte Spülgut 9a, 9b, 9c, insbesondere Spülgut 9c der dritten Spülgutgruppe. In diesem Zusammenhang wird auf die Darstellungen in FIG. 3A und FIG. 3B verwiesen.

Im Einzelnen zeigt FIG. 3A schematisch und in einer Seitenansicht eine exemplarische Ausführungsform des erfindungsgemäßen Beladesystems 10 in einem ersten Zustand, in welchem ein Manipulator 14 des Beladesystems 10 in seiner Ausgangsstellung bzw. Erkennungsposition vorliegt. Hingegen zeigt FIG. 3B schematisch und in einer Seitenansicht das Beladesystem 10 gemäß FIG. 3A in einem zweiten Zustand, in welchem der Manipulator 14 des Beladesystems 10 in seiner Beladeposition vorliegt.

Bei dieser Ausführungsform sollte die dem Beladesystem 10 zugeordnete Steuereinrichtung ausgebildet sein, den Manipulator 14 der dritten Beladeanordnung 13c mit dem Greifersystem 15 zu dem Spülgutteil 9c zu bewegen, wenn mit dem Erkennungssystem 16 insbesondere ein Spülgutteil 9c der dritten Spülgutgruppe in dem über das Zufuhrförderband 11 zugeführten Spülgut 9a, 9b, 9c erkannt wird.

Bei den in FIG. 2A und in FIG. 3A schematisch dargestellten Lösungen ist die Ausgangsstellung des Manipulators 14 jeweils oberhalb des Zufuhrförderbands 11 angeordnet. Der Manipulator 14 ist mit dem Greifersystem 15 ausgestattet.

Bei der in FIG. 2A gezeigten Lösung ist das Greifersystem 15 selbst mit einem Sensor ausgestattet, welcher die Anwesenheit von Spülgut 9a, 9b, 9c und insbesondere Spülgut 9c der dritten Spülgutgruppe, im Greifbereich des mindestens einen Greifers des Greifersystems 15 detektiert.

Sobald Spülgut 9a, 9b, 9c über das Zufuhrförderband 11 in den Greifbereich des mindestens einen Greifers des Greifersystems 15 gefördert wird, wird dieses von dem Sensor detektiert und der Greifer schließt selbstständig. Dadurch wird das Spülgut 9a, 9b, 9c im Greifersystem 15 arretiert.

Im nächsten Schritt nimmt der Manipulator 14 das Spülgutteil 9c von dem Tablett 9b ab. Anschließend wird das Spülgutteil 9c idealerweise in das Haupttransportband 2 der Transportspülmaschine 1 einsortiert. Dazu führt der Manipulator 14 beispielsweise eine Schwenkbewegung durch und platziert das Spülgutteil 9c parallel zu den Transportfächern, in welche das Haupttransportband 2 unterteilt ist. Befindet sich ein Transportfach unterhalb des Spülgutteils 9c, öffnet der Greifer des Greifersystems 15 und lädt so das Spülgutteil 9c in das Haupttransportband 2 ein (vgl. FIG. 2B).

Wie bereits ausgeführt, kann alternativ dazu der Manipulator 14 das Spülgutteil 9c auf eine dedizierte Stellfläche ablegen und so einen Geschirrstapel bilden. Dieser kann dann vom Bedienpersonal in das Haupttransportband 2 einsortiert werden.

In Abhängigkeit des verwendeten Manipulators 14 sowie Greifersystems 15 kann eine zusätzliche Positionierhilfe integriert werden, welche das Spülgut 9c auf dem Tablett ausrichtet. Damit kann der Manipulator 14 das Spülgut 9c effizienter greifen und vom Tablett 9b nehmen.

Wie bei der in den FIGS. 2A und 2B schematisch dargestellten ersten Lösung ist bei der in den FIGS. 3A und 3B gezeigten zweiten Lösung die Ausgangsstellung des Manipulators 14 oberhalb des Zufuhrförderbandes 11. Im Unterschied zu dem Greifersystem 15 gemäß FIG. 2A ist jedoch dem Greifersystem 15 gemäß FIG. 3A ein vorzugsweise optisch arbeitendes Erkennungssystem 16 zugeordnet zum automatischen Erkennen von über das Zufuhrförderband 11 zugeführte Spülgut 9a, 9b, 9c, insbesondere Spülgut 9c der dritten Spülgutgruppe.

Beispielsweise kann das optisch arbeitende Erkennungssystem 16 als Kamerasystem ausgeführt sein, mit welchem das Greifersystem 15 des Manipulators 14 ausgestattet ist. Mit Hilfe dieses optisch arbeitenden Erkennungssystems 16 bzw. Kamerasystems werden die Spülgutteile 9c und deren Position auf den Tabletts 9b, welche kontinuierlich über das Zufuhrförderband 11 an den Zulaufbereich der Transportspülmaschine 1 gefördert werden, erkannt.

Ferner ist eine Steuereinrichtung vorgesehen, welche ausgebildet ist, den Manipulator 14 der dritten Beladeanordnung 13c mit dem Greifersystem 15 zu dem Spülgutteil 9c zu bewegen, wenn mit dem Erkennungssystem 16 ein Spülgutteil 9c der dritten Spülgutgruppe in dem über das Zufuhrförderband 11 zugeführten Spülgut 9a, 9b, 9c erkannt wird.

Dazu befindet sich der Manipulatorarm in seiner Warte- bzw. Erkennungsposition oberhalb des Zufuhrförderbands 11 (vgl. FIG. 3A). Wenn ein Gedecksatz mit Hilfe des Zufuhrförderbands 11 an dem optisch arbeitenden Erkennungssystem 16 vorbei transportiert wird, werden zunächst die Positionen der einzelnen Geschirrteile 9c erfasst. Anschließend positioniert sich der Manipulator 14 automatisch an einem entsprechenden Geschirrteil 9c. Mit Hilfe des optisch arbeitenden Erkennungssystems 16 wird sichergestellt, dass das Geschirrteil 9c korrekt von dem Greifersystem 15 aufgenommen und arretiert ist.

In einem nächsten Schritt nimmt der Manipulator 14 das Spülgutteil 9c vom Tablett 9b ab. Anschließend wird das Spülgutteil 9c idealerweise in das Haupttransportband 2 der Transportspülmaschine 1 einsortiert. Dazu führt der Manipulator 14 eine Schwenkbewegung durch und platziert das Spülgutteil 9c parallel zu den Transportfächern, in welche das Haupttransportband 2 unterteilt ist. Befindet sich ein Transportfach unterhalb des Geschirrteils, öffnet das Greifersystem 15 und lädt so das Geschirrteil 9c in das Haupttransportband ein (vgl. FIG. 3B).

Auch bei dieser Lösung besteht eine Alternative darin, das Spülgutteil 9c mit Hilfe des Manipulators 14 auf eine dedizierte Stellfläche abzulegen und so einen Geschirrstapel zu bilden. Dieser kann dann vom Bedienpersonal in das Haupttransportband einsortiert werden.

In Abhängigkeit des verwendeten Manipulators 14 sowie Greifersystems 15 kann auch hier eine zusätzliche Positionierhilfe integriert werden, welche das Spülgut 9c auf dem Tablett 9b ausrichtet. Damit kann der Manipulator 14 das Spülgut 9c effizienter greifen und von dem Tablett 9b nehmen.

Durch die Kombination von Greifersystem 15 und optisch arbeitenden Erkennungssystem 16 / Kamerasystem besteht der Vorteil darin, dass das Spülgut 9c vor jedem Greifen durch das optisch arbeitenden Erkennungssystem 16 / Kamerasystem erfasst wird.

Dadurch können zusätzliche Arbeitsschritte durch das Bedienpersonal durchgeführt werden, wie beispielsweise Abfälle von den Gedecksätzen zu entfernen, Gläser von den Tabletts abzunehmen, sowie zusätzliches Spülgut, wie beispielsweise Spülgut der vierten oder fünften Spülgutgruppe, von dem Tablett direkt in die Transportspülmaschine 1 einzuladen und Besteckteile 9a unter anderem Spülgut hervorzuholen.

Werden bei manuellen Arbeitsschritten Spülgutteile 9c auf dem Tablett 9b verschoben, so hat dies keinen Einfluss auf die Arbeitsweise des Manipulators 14, da durch das optisch arbeitenden Erkennungssystem 16 die Spülgutteile 9c erst kurz vor dem Abnehmen von dem Tablett 9b detektiert werden.

Im Vergleich dazu sind bei einem vorgeschalteten optisch arbeitenden Erkennungssystem 16 keine manuellen Arbeitsschritte zwischen dem Erkennungssystem 16 und dem Manipulator 14 zulässig. Das Erkennungssystem 16 detektiert dabei die Spülgutteile 9c des Gedecksatzes, welche auf dem Zufuhrförderband 11 an die Transportspülmaschine 1 gefördert wird.

Im nächsten Schritt werden die Geschirrteile 9c vom Manipulator 14 abgenommen. Durch manuelle Arbeitsschritte zwischen dem Erkennungssystem 16 und dem Manipulator 14 können sich die Spülgutteile 9c verschieben, was zu Folge hat, dass der Manipulator 14 die Spülgutteile nicht von dem Tablett 9b abnehmen kann.

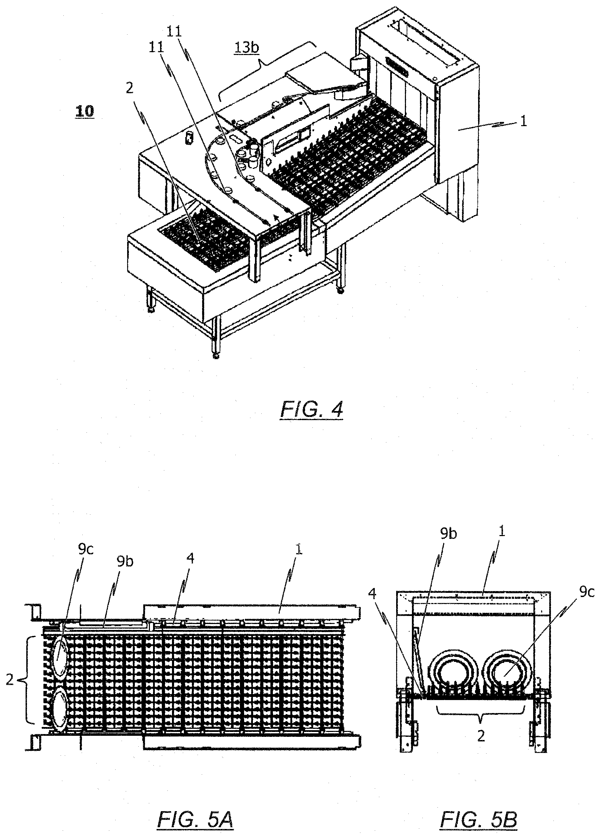

In FIG. 4 ist schematisch und in einer isometrischen Ansicht der Beladebereich einer Transportspülmaschine 1 mit einer exemplarischen Ausführungsform des erfindungsgemäßen Beladesystems 10 gezeigt, bei welcher zum automatischen Beladen einer parallel zu einem Haupttransportband der Transportspülmaschine 1 verlaufenden Tablettspur 4 eine entsprechende Beladeanordnung 13b (zweite Beladenanordnung) zum Einsatz kommt.

FIG. 5A und FIG. 5B zeigen schematisch und in einer Draufsicht (FIG. 5A) und in einer Querschnittansicht (FIG. 5B) das Haupttransportband 2 und die parallel hierzu verlaufende Tablettspur 4 der Transportspülmaschine 1 gemäß FIG. 4.

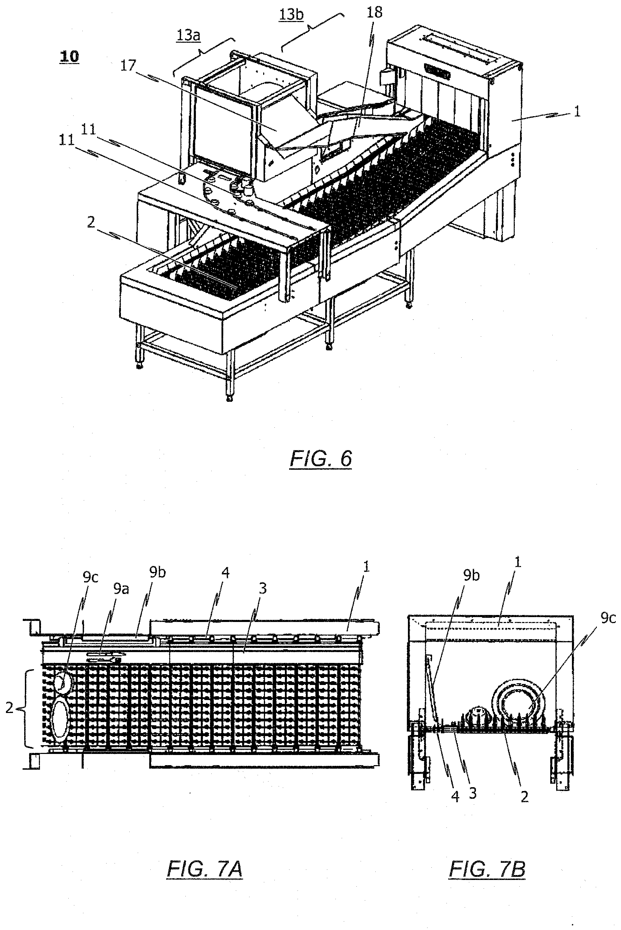

In FIG. 6 ist schematisch und in einer isometrischen Ansicht der Beladebereich einer Transportspülmaschine 1 gezeigt, und zwar zusammen mit einer ersten sowie einer zweiten Beladeanordnung 13a, 13b, welche der Sortieranordnung des erfindungsgemäßen Beladesystems 10 zugeordnet sind. Hierbei dient die erste Beladeanordnung 13a zum automatischen Beladen der Transportspülmaschine 1 mit Spülgut 9a der ersten Spülgutgruppe, d.h. mit aus einem Metall, insbesondere Edelstahl gefertigtem Besteck und/oder Besteckteilen.

FIG. 7A und FIG. 7B zeigen schematisch und in einer Draufsicht (FIG. 7A) und in einer Querschnittansicht (FIG. 7B) das Haupttransportband 2 und die parallel hierzu verlaufenden Tablett- und Besteckspuren 4, 3 der Transportspülmaschine 1 gemäß FIG. 6.

Die erste Beladeanordnung 13a ist - in Transportrichtung des Zufuhrförderbandes 11 gesehen - stromaufwärts der zweiten Beladeanordnung 13b angeordnet. Die zweite Beladeanordnung 13b dient dazu, automatisch Spülgut 9b der zweiten Spülgutgruppe in die Transportspülmaschine 1 einzuladen.

Wie es den Darstellungen in FIG. 7A und FIG. 7B entnommen werden kann, weist bei dieser Ausführungsform die Transportvorrichtung der Transportspülmaschine 1 ein erstes Transportband 4 für Tabletts oder tablettartiges Spülgut 9b (= Tablettspur), sowie ein parallel zum ersten Transportband 4 verlaufendes zweites Transportband 3 für Besteck oder besteckartige Teile (= Besteckspur) sowie ein parallel hierzu verlaufendes drittes Transportband 2 (= Haupttransportband) für Spülgut 9c der dritten Spülgutgruppe auf.

Das erste Transportband 4 ist im Vergleich zu dem dritten Transportband 2 relativ schmal ausgeführt, so dass ein Tablett oder tablettartiges Spülgut 9b nur in einem hochkant gestellten Zustand und parallel zur Transportrichtung orientiert von dem ersten Transportband 4 aufnehmbar ist. Die Orientierung des von dem ersten Transportband 4 aufzunehmenden Spülguts 9b parallel zur Laufrichtung des ersten Transportbandes 4 bedingt eine minimale Flächennutzung der Gesamtbandfläche.

Mit anderen Worten, das erste Transportband 4 weist eine derart reduzierte Breite auf, dass von dem ersten Transportband 4 nur eine minimale Fläche der Gesamtbandfläche belegt wird, was gerade das Einstellen von Tabletts oder tablettartigem Spülgut 9b erlaubt, wenn dieses Spülgut 9b in einem hochkant gestellten Zustand und parallel zur Transportrichtung orientiert vorliegt.

Das zweite Transportband 3, welches als Besteck-Transportband ausgeführt ist, weist im Vergleich zu dem dritten Transportband 2 ebenfalls eine verringerte Breite auf.

Auf diese Weise ist es möglich, dass das dritte Transportband 2 nach wie vor eine hinreichende Breite aufweist, um nahezu ohne Einschränkungen für den Transport von Spülgut 9c der dritten Spülgutgruppe, insbesondere Teller, Schalen und/oder Gläser, durch die einzelnen Behandlungszonen der Transportspülmaschinen nutzbar bleibt. Auf das dritte Transportband 2 können somit nach wie vor beispielsweise Gläserkörbe oder GN-Behälter neben dem auf dem ersten Transportband aufgenommenen Tablett bzw. tablettartigem Spülgut 9b gestellt werden.

In FIG. 4 und FIG. 6 ist jeweils nur ein Teil der Sortieranordnung gezeigt, und zwar jener Bereich der Sortieranordnung, welcher - in Transportrichtung des Zufuhrbandes gesehen - hinter der dritten Beladeanordnung 13a, 13b, 13c angeordnet ist.

Von daher werden der ersten Beladeanordnung 13a gemäß FIG. 4 und FIG. 6 über das Zufuhrförderband 11 die Gedecksätze zugeführt, bei denen bereits das Spülgut 9c der dritten Spülgutgruppe automatisch mit Hilfe der (in FIG. 4 und FIG. 6 nicht gezeigten) dritten Beladeanordnung 13c entnommen wurde. In der ersten Beladeanordnung 13a wird das Besteck 9a von den Tabletts 9b mit Hilfe eines Besteckabhebemagneten in Gestalt eines ansteuerbaren Magneten 17 abgenommen und die Besteckteile 9a werden dann automatisch in die Besteckspur 3 der Bandtransportspülmaschine 1 eingebracht.

Anschließend wird das Tablett 9b zur Eintaktvorrichtung der zweiten Beladeanordnung 13b gefördert, wo es automatisch in die entsprechende Tablettspur 4 der Transportspülmaschine 1 eingeordnet wird (vgl. FIG. 6). In FIG. 6 ist eine Ausführungsform einer Eintaktvorrichtung der zweiten Beladeanordnung 13b gezeigt. Kurz zusammengefasst weist die Eintaktvorrichtung eine entsprechende Führung 18 auf, über welche die Tabletts 9b von ihrem horizontalen Zustand automatisch in einen hochkant gestellten Zustand überführt und dann in die entsprechende Tablettspur 4 der Transportspülmaschine 1 eingebracht werden.

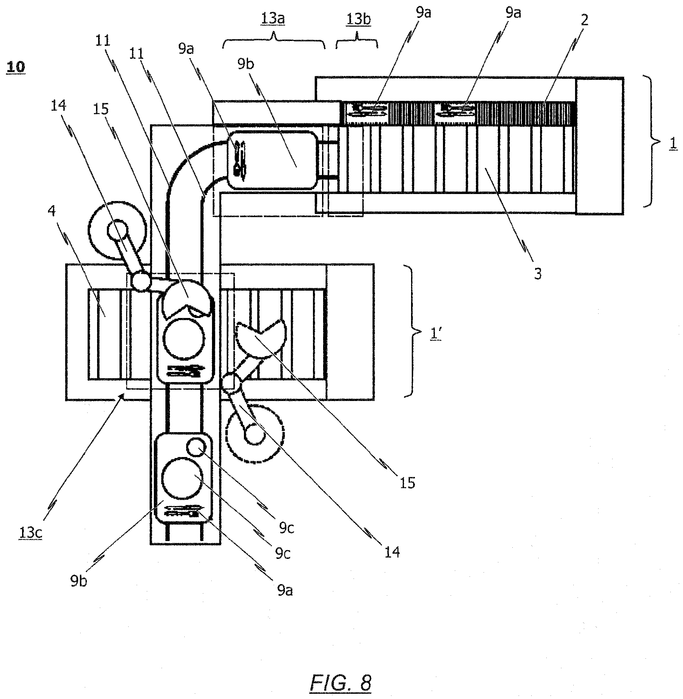

Nachfolgend wird unter Bezugnahme auf FIG. 8 die erfindungsgemäße Transportspülmaschinenanordnung beschrieben. Im Einzelnen zeigt FIG. 8 schematisch und in einer Draufsicht die Beladebereiche einer zwei Transportspülmaschinen umfassenden Transportspülmaschinenanordnung mit einer exemplarischen Ausführungsform des erfindungsgemäßen Beladesystems.

Durch das Vorsehen von mehreren Transportspülmaschinen 1, 1', die jeweils mindestens eine Transportspur 2, 3, 4 aufweisen, werden unterschiedliche Transportspuren 2, 3, 4 für unterschiedliche Spülgutarten bereitgestellt.

Die in FIG. 8 schematisch gezeigte Transportspülmaschinenanordnung weist ferner ein Beladesystem 10 auf, welches in struktureller und funktioneller Hinsicht dem zuvor unter Bezugnahme auf FIG. 1 beschriebenen Beladesystem 10 entspricht.

Insbesondere ist bei der in FIG. 8 schematisch gezeigten Transportspülmaschinenanordnung vorgesehen, dass der Sortieranordnung des Beladesystems 10 für jede Transportspur 2, 3, 4 der beiden Transportspülmaschinen 1, 1' mindestens eine Beladeanordnung 13a, 13b, 13c zugeordnet ist zum vorzugsweise automatischen Einstellen von Spülgut 9a, 9b, 9c einer bestimmten Spülgutgruppe in die der mindestens einen Beladeanordnung 13a, 13b, 13c zugeordneten Transportspur 2, 3, 4 der beiden Transportspülmaschinen 1, 1'.

Insbesondere ist die Sortieranordnung des Beladesystems 10 ausgebildet ist, das über das Zufuhrförderband 11 zugeführte Spülgut 9a, 9b, 9c nach mindestens folgende Spülgutgruppen zu sortieren:
- eine erste Spülgutgruppe, welche aus einem Metall, insbesondere Edelstahl, gefertigtes Besteck und/oder Besteckteile 9a umfasst;
- eine zweite Spülgutgruppe, welche aus einem Kunststoffmaterial gefertigte Tabletts und tablettartige Gegenstände 9b umfasst; und
- eine dritte Spülgutgruppe, welche aus Porzellan oder einem porzellanartigen Material gefertigte Geschirrteile 9c, insbesondere Teller, Tassen und/oder Schälchen, umfasst.

Insbesondere ist in diesem Zusammenhang vorgesehen, dass der Sortieranordnung des Beladesystems 10 eine erste Beladeanordnung 13a zugeordnet ist zum automatischen Beladen einer ersten Transportspur 2 der beiden Transportspülmaschinen 1, 1' mit Spülgut 9a der ersten Spülgutgruppe, wobei der Sortieranordnung vorzugsweise eine zweite Beladeanordnung 13b zugeordnet ist zum automatischen Beladen einer zweiten Transportspur 3 der beiden Transportspülmaschinen 1, 1' mit Spülgut 9b der zweiten Spülgutgruppe, und wobei der Sortieranordnung vorzugsweise eine dritte Beladeanordnung 13c zugeordnet ist zum automatischen Beladen einer dritten Transportspur 4 der beiden Transportspülmaschinen 1, 1' mit Spülgut 9c der dritten Spülgutgruppe.

Wie in FIG. 8 angedeutet, kann dabei vorgesehen sein, dass die erste und zweite Transportspur 2, 3 Teil einer Transportvorrichtung einer ersten Transportspülmaschine 1 sind, während die dritte Transportspur 4 Teil einer Transportvorrichtung einer zweiten Transportspülmaschine 1' ist.

## Patentansprüche

1. Anordnung aus mindestens einer Transportspülmaschine (1, 1') mit unterschiedlichen Transportspuren, vorzugsweise in Gestalt jeweils eines Transportbandes (2, 3, 4), und einem Beladesystem (10), wobei das Beladesystem (10) Folgendes aufweist:
- ein Zufuhrförderband (11) zum Zuführen von Spülgut (9a, 9b, 9c) zu Beladebereichen der mindestens einen Transportspülmaschine (1, 1'); und
- eine Sortieranordnung zum Sortieren des über das Zufuhrförderband (11) den Beladebereichen der mindestens einen Transportspülmaschine (1, 1') zugeführten Spülguts (9a, 9b, 9c) nach vorab festgelegten oder festlegbaren Spülgutgruppen,
wobei die Sortieranordnung des Beladesystems (10) für jede Transportspur der mindestens einen Transportspülmaschine (1, 1') mindestens eine Beladeanordnung (13a, 13b, 13c) aufweist zum vorzugsweise automatischen Einstellen von Spülgut (9a, 9b, 9c) einer bestimmten Spülgutgruppe in die der mindestens einen Beladeanordnung (13a, 13b, 13c) zugeordneten Transportspur der mindestens einen Transportspülmaschine (1, 1'),
wobei die Sortieranordnung des Beladesystems (10) ausgebildet ist, das über das Zufuhrförderband (11) zugeführte Spülgut (9a, 9b, 9c) nach mindestens folgende Spülgutgruppen zu sortieren:
- eine erste Spülgutgruppe, welche aus einem Metall, insbesondere Edelstahl, gefertigtes Besteck und/oder Besteckteile (9a) umfasst;
- eine zweite Spülgutgruppe, welche aus einem Kunststoffmaterial gefertigte Tabletts und tablettartige Gegenstände (9b) umfasst; und
- eine dritte Spülgutgruppe, welche aus Porzellan oder einem porzellanartigen Material gefertigte Geschirrteile (9c), insbesondere Teller, Tassen und/oder Schälchen, umfasst;
wobei die Sortieranordnung eine erste Beladeanordnung (13a) aufweist zum automatischen Beladen einer ersten Transportspur der mindestens einen Transportspülmaschine (1, 1') mit Spülgut (9a) der ersten Spülgutgruppe, wobei die Sortieranordnung eine zweite Beladeanordnung (13b) aufweist zum automatischen Beladen einer zweiten Transportspur der mindestens einen Transportspülmaschine (1, 1') mit Spülgut (9b) der zweiten Spülgutgruppe, und wobei die Sortieranordnung eine dritte Beladeanordnung (13c) aufweist zum automatischen Beladen einer dritten Transportspur der mindestens einen Transportspülmaschine (1, 1') mit Spülgut (9c) der dritten Spülgutgruppe;
wobei die erste und/oder zweite Transportspur Teil einer Transportvorrichtung einer ersten Transportspülmaschine sind/ist, und wobei die dritte Transportspur Teil einer Transportvorrichtung einer zweiten Transportspülmaschine ist;
wobei die dritte Beladeanordnung (13c) mindestens einen Manipulator (14) aufweist, welcher ausgebildet ist, Spülgutteile (9c) der dritten Spülgutgruppe zu greifen, von dem Zufuhrförderband (11) abzunehmen und an einer vorab festgelegten oder festlegbaren dedizierten Position abzulegen,
wobei der mindestens eine Manipulator (14) der dritten Beladeanordnung (13c) ein Greifersystem (15) mit mindestens einer Greifzange und/oder mit mindestens einem Sauggreifer aufweist, wobei der Manipulator (14) ausgebildet ist, mit dem Greifersystem (15) Spülgut (9c) der dritten Spülgutgruppe zu greifen, von dem Zufuhrförderband (11) abzunehmen und an der vorab festgelegten oder festlegbaren dedizierten Position abzulegen;
wobei der mindestens eine Manipulator (14) der dritten Beladeanordnung (13c) eine Ausgangsstellung aufweist, in welcher das Greifersystem (15) des Manipulators (14) derart - in vertikaler Richtung gesehen - oberhalb des Zufuhrförderbands (11) angeordnet ist, dass Spülgutteile (9c) der dritten Spülgutgruppe bei deren Transport mit dem Zufuhrförderband (11) in den Greifbereich der mindestens einen Greifzange und/oder in den Greifbereich des mindestens einen Sauggreifers gefördert werden, wobei die Ausgangsstellung des mindestens einen Manipulators (14) der dritten Beladeanordnung (13c) vorzugsweise derart gewählt ist, dass beim Transport mit dem Zufuhrförderband (11) nur Spülgutteile (9c) der dritten Spülgutgruppe, nicht aber Spülgutteile (9a, 9b) der ersten oder zweiten Spülgutgruppe in den Greifbereich der mindestens einen Greifzange und/oder des mindestens einen Sauggreifers gefördert werden; und
**dadurch gekennzeichnet, dass** - in Transportrichtung des Zufuhrförderbandes (11) gesehen - die dritte Beladeanordnung (13c) stromaufwärts der ersten und zweiten Beladeanordnung (13a, 13b) angeordnet ist, und wobei die erste Beladeanordnung (13a) vorzugsweise stromaufwärts der zweiten Beladeanordnung (13b) angeordnet ist.

2. Anordnung nach Anspruch 1,
wobei die vorab festgelegte oder festlegbare dedizierte Position in einem Bereich einer dritten Transportspur der mindestens einen Transportspülmaschine (1, 1') liegt; oder
wobei die vorab festgelegte oder festlegbare dedizierte Position in einem Bereich liegt, der sich vorzugsweise außerhalb eines Transportbandes der mindestens einen Transportspülmaschine (1, 1') befindet und als Stellfläche zum Ausbilden eines Geschirrstapels dient.

3. Anordnung nach Anspruch 1 oder 2,
wobei der mindestens eine Manipulator (14) der dritten Beladeanordnung (13c) einen ansteuerbaren Magneten (17) aufweist zum bedarfsweisen Abnehmen von Spülgut (9a) der ersten Spülgutgruppe von über das Zufuhrförderband (11) zugeführten Spülgut (9a, 9b, 9c).

4. Anordnung nach einem der Ansprüche 1 bis 3,
wobei das Greifersystem (15) des mindestens einen Manipulators (14) der dritten Beladeanordnung (13c) eine Sensorik aufweist, welche ausgebildet ist, zu erfassen, wenn sich mindestens ein Spülgutteil (9a, 9b, 9c) und insbesondere mindestens ein Spülgutteil (9c) der dritten Spülgutgruppe in dem Greifbereich der mindestens einen Greifzange und/oder in dem Greifbereich des mindestens einen Sauggreifers befindet,
wobei ferner eine Steuereinrichtung vorgesehen ist, welche ausgebildet ist, ein Greifen der mindestens einen Greifzange und/oder des mindestens einen Sauggreifers zu initiieren, wenn die Sensorik des Greifersystems (15) erfasst, dass sich mindestens ein Spülgutteil (9a, 9b, 9c) und insbesondere mindestens ein Spülgutteil (9c) der dritten Spülgutgruppe in dem Greifbereich der mindestens einen Greifzange und/oder in dem Greifbereich des mindestens einen Sauggreifers befindet,
wobei die Steuereinrichtung vorzugsweise ferner ausgebildet ist, den mindestens einen Manipulator (14) der dritten Beladeanordnung (13a, 13b, 13c) derart anzusteuern, dass dieser das mindestens eine von dem Greifersystem (15) gegriffene mindestens eine Spülgutteil von dem Zufuhrförderband (11) abnimmt und an einer vorab festgelegten oder festlegbaren dedizierten Position ablegt; und/oder
wobei das Greifersystem (15) des mindestens einen Manipulators (14) der dritten Beladeanordnung (13c) eine Positionierhilfe aufweist, welche mindestens ein Führungselement aufweist, wobei das mindestens eine Führungselement ausgebildet ist, vorzugsweise nur Spülgut (9c) der dritten Spülgutgruppe, welches über das Zufuhrförderband (11) zugeführt wird, in Richtung des Greifbereiches der mindestens einen Greifzange und/oder des mindestens einen Saugreifers zu lenken; und/oder
wobei die erste Beladeanordnung (13a, 13b, 13c) einen ansteuerbaren Magneten (17) aufweist zum bedarfsweisen Abnehmen von Spülgut (9a) der ersten Spülgutgruppe von über das Zufuhrförderband (11) zugeführten Spülgut (9a, 9b, 9c) und insbesondere von über das Zufuhrförderband (11) zugeführten Tabletts.

5. Anordnung nach einem der Ansprüche 1 bis 4,
wobei das Greifersystem (15) ein vorzugsweise optisch arbeitendes Erkennungssystem (16) aufweist zum automatischen Erkennen von über das Zufuhrförderband (11) zugeführte Spülgut (9a, 9b, 9c), insbesondere Spülgut (9c) der dritten Spülgutgruppe, wobei ferner eine Steuereinrichtung vorgesehen ist, welche ausgebildet ist, den Manipulator (14) der dritten Beladeanordnung (13c) mit dem Greifersystem (15) zu dem Spülgutteil (9c) zu bewegen, wenn mit dem Erkennungssystem (16) ein Spülgutteil (9c) der dritten Spülgutgruppe in dem über das Zufuhrförderband (11) zugeführten Spülgut (9a, 9b, 9c) erkannt wird.

6. Anordnung nach einem der Ansprüche 1 bis 5,
wobei die erste und zweite Beladeanordnung (13a, 13b) in einem gemeinsamen Bereich am Ende des Zufuhrförderbandes (11) ausgeführt sind, wobei in dem gemeinsamen Bereich eine Führung (18) vorgesehen ist, über welche von dem Zufuhrförderband (11) zugeführte Tablett von einem waagerechten Zustand in einen hochkant gestellten Zustand überführt und vorzugsweise automatisch in eine als Tablett-Transportband ausgeführte Transportspur der mindestens einen Transportspülmaschine (1, 1') eingestellt werden; und/oder
wobei die Beladeanordnungen (13a, 13b, 13c) ausgebildet sind, Spülgut (9a, 9b, 9c) der den Beladeanordnungen (13a, 13b, 13c) jeweils zugeordneten Spülgutgruppen in dedizierte Bereiche eine gemeinsame Transportspur der Transportspülmaschine (1, 1') und/oder in dedizierte Transportspuren (2, 3, 4) der Transportspülmaschine (1, 1') einzustellen.

## Claims

1. Assembly of at least one conveyor dishwasher (1, 1') having different conveying tracks, preferably in the form of a conveyor belt (2, 3, 4), and a loading system (10), wherein the loading system (10) comprises:
- a feed conveyor belt (11) for delivering washware (9a, 9b, 9c) to loading regions of the at least one conveyor dishwasher (1, 1'); and
- a sorting assembly for sorting the washware (9a, 9b, 9c) delivered to the loading regions of the at least one conveyor dishwasher (1, 1') via the feed conveyor belt (11) according to previously defined or definable washware groups,
wherein the sorting assembly of the loading system (10) for each conveying track of the at least one conveyor dishwasher (1, 1') comprises at least one loading assembly (13a, 13b, 13c) for preferably automatically setting the washware (9a, 9b, 9c) of a particular washware group into the conveying track associated with the at least one loading assembly (13a, 13b, 13c) of the at least one conveyor dishwasher (1, 1'),
wherein the sorting assembly of the loading system (10) is in particular configured to sort the washware (9a, 9b, 9c) delivered via the feed conveyor belt (11) according to at least the following washware groups:
- a first washware group, which comprises cutlery and/or pieces of cutlery (9a) made of metal, in particular stainless steel;
- a second washware group, which comprises trays and tray-like articles (9b) made of a plastic material; and
- a third washware group, which comprises dishes (9c), in particular plates, cups and/or bowls, made of porcelain or a porcelain-like material;
wherein the sorting assembly comprises a first loading assembly (13a) for automatically loading a first conveying track of the at least one conveyor dishwasher (1, 1') with washware (9a) of the first washware group, wherein the sorting assembly comprises a second loading assembly (13b) for automatically loading a second conveying track of the at least one conveyor dishwasher (1, 1') with washware (9b) of the second washware group, and
wherein the sorting assembly comprises a third loading assembly (13c) for automatically loading a third conveying track of the at least one conveyor dishwasher (1, 1') with washware (9c) of the third washware group;
wherein the first and/or second conveying track is/are part of a conveyor apparatus of a first conveyor dishwasher, and wherein the third conveying track is part of a conveyor apparatus of a second conveyor dishwasher; wherein the third loading assembly (13c) comprises at least one manipulator (14), which is configured to grip washware items (9c) of the third washware group, remove them from the feed conveyor belt (11), and set them down at a previously defined or definable dedicated position,
wherein the at least one manipulator (14) of the third loading assembly (13c) comprises a gripper system (15) having at least one set of gripping tongs and/or having at least one suction gripper, wherein the manipulator (14) is configured to use the gripper system (15) to grip washware (9c) of the third washware group, remove it from the feed conveyor belt (11) and set it down at a previously defined or definable dedicated position;
wherein the at least one manipulator (14) of the third loading assembly (13c) has a starting position, in which, viewed in vertical direction, the gripper system (15) of the manipulator (14) is disposed above the feed conveyor belt (11) such that, during their transport, washware items (9c) of the third washware group are conveyed by the feed conveyor belt (11) into the gripping region of the at least one set of gripping tongs and/or into the gripping region of the at least one suction gripper, wherein the starting position of the at least one manipulator (14) of the third loading assembly (13c) is preferably selected such that, during transport with the feed conveyor belt (11), only washware items (9c) of the third washware group, but not washware items (9a, 9b) of the first or second washware group are conveyed into the gripping region of the at least one set of gripping tongs and/or of the at least one suction gripper; and
**characterized in that** - when viewed in the transport direction of the feed conveyor belt (11) - the third loading assembly (13c) is disposed upstream of the first and second loading assemblies (13a, 13b), and wherein the first loading assembly (13a) is preferably disposed upstream of the second loading assembly (13b).

2. The assembly according to claim 1,
wherein the predetermined or determinable dedicated position is in an area of a third conveying track of the at least one conveyor dishwasher (1, 1'); or
wherein the predetermined or determinable dedicated position is in an area that is preferably located outside a conveyor belt of the at least one conveyor dishwasher (1, 1') and serves as a storage space for forming a stack of dishes.

3. The assembly according to claim 1 or 2,
wherein the at least one manipulator (14) of the third loading assembly (13c) comprises an actuable magnet (17) for removing washware (9a) of the first washware group from the washware (9a, 9b, 9c) delivered via the feed conveyor belt (11).

4. Assembly according to one of claims 1 to 3,
wherein the gripper system (15) of the at least one manipulator (14) of the third loading assembly (13c) comprises a sensor system, which is configured to detect the presence of at least one washware item (9a, 9b, 9c), and in particular at least one washware item (9c) of the third washware group, in the gripping region of the at least one set of gripping tongs and/or in the gripping region of the at least one suction gripper, wherein a control device is further provided, which is configured to initiate gripping by the at least one set of gripping tongs and/or the at least one suction gripper when the sensor system of the gripper system (15) determines that at least one washware item (9a, 9b, 9c), and in particular at least one washware item (9c) of the third washware group, is located in the gripping region of the at least one set of gripping tongs and/or in the gripping region of the at least one suction gripper, wherein the control device is preferably further configured to actuate the at least one manipulator (14) of the third loading assembly (13a, 13b, 13c) such that said manipulator removes the at least one washware item gripped by the gripper system (15) from the feed conveyor belt (11) and sets it down at a previously defined or definable dedicated position; and/or
wherein the gripper system (15) of the at least one manipulator (14) of the third loading assembly (13c) comprises a positioning aid comprising at least one guide element, wherein the at least one guide element is configured to preferably guide only washware (9c) of the third washware group delivered via the feed conveyor belt (11) in the direction of the gripping region of the at least one set of gripping tongs and/or of the at least one suction gripper; and/or wherein the first loading assembly (13a, 13b, 13c) comprises an actuable magnet (17) for removing washware (9a) of the first washware group from washware (9a, 9b, 9c) delivered via the feed conveyor belt (11), and in particular from trays delivered via the feed conveyor belt (11), as needed.

5. Assembly according to one of claims 1 to 4,
wherein the gripper system (15) comprises a preferably optically operating identification system (16) to automatically identify washware (9a, 9b, 9c) delivered via the feed conveyor belt (11), in particular washware (9c) of the third washware group, wherein a control device is further provided, which is configured to move the manipulator (14) of the third loading assembly (13c) with the gripper system (15) to the washware item (9c) when the identification system (16) identifies a washware item (9c) of the third washware group in the washware (9a, 9b, 9c) delivered via the feed conveyor belt (11).

6. Assembly according to one of the claims 1 to 5,
wherein the first and second loading assembly (13a, 13b) are implemented in a common region at the end of the feed conveyor belt (11), wherein a guide (18) is provided in the common region, via which trays delivered by the feed conveyor belt (11) are transferred from a horizontal state to an upright position and placed preferably automatically into a conveying track of the at least one conveyor dishwasher (1, 1') implemented as a tray conveyor belt; and/or
wherein the loading assemblies (13a, 13b, 13c) are configured to place washware (9a, 9b, 9c) of the washware groups associated with the respective loading assemblies (13a, 13b, 13c) into dedicated regions of a common conveying track of the conveyor dishwasher (1, 1') and/or into dedicated conveying tracks (2, 3, 4) of the conveyor dishwasher (1, 1').

## Revendications

1. Assemblage de l'au moins un lave-vaisselle à transporteur (1, 1') ayant différentes voies de transport, de préférence sous la forme d'une bande transporteuse (2, 3, 4), et d'un système de chargement (10), dans lequel le système de chargement (10) comprend :
- une bande transporteuse d'alimentation (11) pour l'acheminement de la vaisselle (9a, 9b, 9c) à des régions de chargement de l'au moins un lave-vaisselle à transporteur (1, 1') ; et
- un ensemble de tri pour trier la vaisselle (9a, 9b, 9c) acheminée vers les régions de chargement de l'au moins un lave-vaisselle à transporteur (1, 1') via la bande transporteuse d'alimentation (11) selon des groupes de vaisselle définis ou pouvant être définis précédemment,
dans lequel l'ensemble de tri du système de chargement (10) pour chaque voie de transport dudit au moins un lave-vaisselle à transporteur (1, 1') comprend l'au moins un ensemble de chargement (13a, 13b, 13c) pour placer de préférence automatiquement la vaisselle (9a, 9b, 9c) d'un groupe de vaisselle particulier dans la voie de transport associée audit au moins un ensemble de chargement (13a, 13b, 13c) de l'au moins un lave-vaisselle à transporteur (1, 1'), dans lequel l'ensemble de tri du système de chargement (10) est en particulier configuré pour trier la vaisselle (9a, 9b, 9c) acheminée via la bande transporteuse d'alimentation (11) selon au moins les groupes de vaisselle suivants :
- un premier groupe de vaisselles, qui comprend des couverts et/ou des pièces de coutellerie (9a) composés de métal, en particulier d'acier inoxydable ;
- un deuxième groupe de vaisselles, qui comprend des plateaux et des objets de type plateau (9b) composés d'une matière plastique ; et
- un troisième groupe de vaisselles, qui comprend des récipients (9c), en particulier des assiettes, des tasses et/ou des bols, composés de porcelaine ou d'une matière de type porcelaine ;
dans lequel l'ensemble de tri comprend un premier ensemble de chargement (13a) pour charger automatiquement une première voie de transport de l'au moins un lave-vaisselle à transporteur (1, 1') avec de la vaisselle (9a) du premier groupe de vaisselles, dans lequel l'ensemble de tri comprend un deuxième ensemble de chargement (13b) pour charger automatiquement une deuxième voie de transport de l'au moins un lave-vaisselle à transporteur (1, 1') avec de la vaisselle (9b) du deuxième groupe de vaisselles, et dans lequel l'ensemble de tri comprend un troisième ensemble de chargement (13c) pour charger automatiquement une troisième voie de transport de l'au moins un lave-vaisselle à transporteur (1, 1') avec de la vaisselle (9c) du troisième groupe de vaisselles ;
dans lequel la première et/ou la deuxième voie(s) de transport fait/font partie d'un appareil transporteur d'un premier lave-vaisselle à transporteur, et dans lequel la troisième voie de transport fait partie d'un appareil transporteur d'un deuxième lave-vaisselle à transporteur ; dans lequel le troisième ensemble de chargement (13c) comprend l'au moins un manipulateur (14), qui est configuré pour saisir des articles de vaisselle (9c) du troisième groupe de vaisselles, les retirer de la bande transporteuse d'alimentation (11), et les déposer au niveau d'une position dédiée définie ou définissable précédemment,
dans lequel l'au moins un manipulateur (14) du troisième ensemble de chargement (13c) comprend un système de préhension (15) ayant l'au moins un jeu de pinces de préhension et/ou ayant l'au moins une pince d'aspiration, dans lequel le manipulateur (14) est configuré pour utiliser le système de préhension (15) afin de saisir la vaisselle (9c) du troisième groupe de vaisselles, la retirer de la bande transporteuse d'alimentation (11) et la déposer au niveau d'une position dédiée définie ou définissable précédemment ;
dans lequel l'au moins un manipulateur (14) du troisième ensemble de chargement (13c) a une position de départ, dans laquelle, vue dans une direction verticale, le système de préhension (15) du manipulateur (14) est disposé au-dessus de la bande transporteuse d'alimentation (11) de telle sorte que, pendant leur transport, les articles de vaisselle (9c) du troisième groupe de vaisselles sont transportés par la bande transporteuse d'alimentation (11) jusque dans la région de préhension de l'au moins un jeu de pinces de préhension et/ou jusque dans la région de préhension de l'au moins une pince d'aspiration, dans lequel la position de départ de l'au moins un manipulateur (14) du troisième ensemble de chargement (13c) est, de préférence, sélectionnée de telle sorte que, lorsqu'ils sont transportés par la bande transporteuse d'alimentation (11), seuls les articles de vaisselle (9c) du troisième groupe de vaisselles, mais aucun article de vaisselle (9a, 9b) des premier ou deuxième groupes de vaisselles, sont transportés jusque dans la région de préhension de l'au moins un jeu de pinces de préhension et/ou de l'au moins une pince d'aspiration ; et
**caractérisé en ce que** - lorsqu'il est vu dans la direction de transport de la bande transporteuse d'alimentation (11) - le troisième ensemble de chargement (13c) est disposé en amont des premier et deuxième ensembles de chargement (13a, 13b), et dans lequel le premier ensemble de chargement (13a) est, de préférence, disposé en amont du deuxième ensemble de chargement (13b).

2. Ensemble selon la revendication 1,
dans lequel la position dédiée prédéterminée ou déterminable est dans une zone d'une troisième voie de transport de l'au moins un lave-vaisselle à transporteur (1, 1') ; ou
dans lequel la position dédiée prédéterminée ou déterminable est dans une zone qui est, de préférence, située à l'extérieur d'une bande transporteuse de l'au moins un lave-vaisselle à transporteur (1, 1') et sert d'espace de stockage pour former un empilement de récipients.

3. Ensemble selon la revendication 1 ou 2,
dans lequel l'au moins un manipulateur (14) du troisième ensemble de chargement (13c) comprend un aimant actionnable (17) pour retirer la vaisselle (9a) du premier groupe de vaisselles à partir de la vaisselle (9a, 9b, 9c) acheminée par l'intermédiaire de la bande transporteuse d'alimentation (11).

4. Ensemble selon l'une des revendications 1 à 3,
dans lequel un système de préhension (15) de l'au moins un manipulateur (14) du troisième ensemble de chargement (13c) comprend un système de capteur, lequel est configuré pour détecter la présence de l'au moins un article de vaisselle (9a, 9b, 9c), et en particulier de l'au moins un article de vaisselle (9c) du troisième groupe de vaisselles, dans la région de préhension de l'au moins un jeu de pinces de préhension et/ou dans la région de préhension de l'au moins une pince d'aspiration, dans lequel un dispositif de commande est en outre prévu, lequel est configuré pour lancer la préhension par l'au moins un jeu de pinces de préhension et/ou l'au moins une pince d'aspiration lorsque le système de capteur du système de préhension (15) détermine qu'au moins un article de vaisselle (9a, 9b, 9c), et en particulier au moins un article de vaisselle (9c) du troisième groupe de vaisselles, est situé dans la région de préhension de l'au moins un jeu de pinces de préhension et/ou dans la région de préhension de l'au moins une pince d'aspiration, dans lequel le dispositif de commande est, de préférence, également configuré pour actionner l'au moins un manipulateur (14) du troisième ensemble de chargement (13a, 13b, 13c) de telle sorte que ledit manipulateur retire ledit au moins un article de vaisselle, que le système de préhension (15) saisit, de la bande transporteuse d'alimentation (11) et le dépose au niveau d'une position dédiée définie ou définissable précédemment ; et/ou
dans lequel le système de préhension (15) de l'au moins un manipulateur (14) du troisième ensemble de chargement (13c) comprend un auxiliaire de positionnement comprenant l'au moins un élément de guidage, dans lequel l'au moins un élément de guidage est configuré pour guider, de préférence, uniquement de la vaisselle (9c) du troisième groupe de vaisselles acheminée par l'intermédiaire de la bande transporteuse d'alimentation (11) dans la direction de la région de préhension de l'au moins un jeu de pinces de préhension et/ou de l'au moins un dispositif d'aspiration ; et/ou
dans lequel le premier ensemble de chargement (13a, 13b, 13c) comprend un aimant actionnable (17) pour retirer la vaisselle (9a) du premier groupe de vaisselles de la vaisselle (9a, 9b, 9c) acheminée par l'intermédiaire de la bande transporteuse d'alimentation (11), et en particulier des plateaux acheminés par l'intermédiaire de la bande transporteuse d'alimentation (11), selon les besoins.

5. Ensemble selon l'une des revendications 1 à 4,
dans lequel le système de préhension (15) comprend un système d'identification (16), fonctionnant de préférence optiquement, pour identifier automatiquement la vaisselle (9a, 9b, 9c) acheminée par l'intermédiaire de la bande transporteuse d'alimentation (11), en particulier la vaisselle (9c) du troisième groupe de vaisselles, dans lequel un dispositif de commande est en outre prévu, qui est configuré pour déplacer le manipulateur (14) du troisième ensemble de chargement (13c) avec le système de préhension (15) vers l'article de vaisselle (9c) lorsque le système d'identification (16) identifie un article de vaisselle (9c) du troisième groupe de vaisselles dans la vaisselle (9a, 9b, 9c) acheminée par l'intermédiaire de la bande transporteuse d'alimentation (11).

6. Ensemble selon l'une des revendications 1 à 5,
dans lequel les premier et deuxième ensembles de chargement (13a, 13b) sont mis en œuvre dans une région commune à l'extrémité de la bande transporteuse d'alimentation (11), dans lequel un guide (18) est prévu dans la région commune, par l'intermédiaire duquel les plateaux acheminés par la bande transporteuse d'alimentation (11) sont transférés d'un état horizontal à une position verticale et placés de préférence automatiquement dans une piste de transport de l'au moins un lave-vaisselle à transporteur (1, 1') mis en œuvre en tant que bande transporteuse de plateaux ; et/ou
dans lequel les ensembles de chargement (13a, 13b, 13c) sont configurés pour placer de la vaisselle (9a, 9b, 9c) des groupes de vaisselle associés aux ensembles de chargement (13a, 13b, 13c) respectifs dans des régions dédiées d'une piste de transport commune du lave-vaisselle à transporteur (1, 1') et/ou dans des pistes de transport dédiées (2, 3, 4) du lave-vaisselle à transporteur (1, 1').
